# EUROPÄISCHE PATENTSCHRIFT

(11) **EP 3 143 478 B1**
(45) Veröffentlichungstag und Bekanntmachung des Hinweises auf die Patenterteilung: **06.07.2022**
(21) Anmeldenummer: 15727891.2
(22) Anmeldetag: 12.05.2015
(51) Int. Cl.: G06F 3/01, G06F 3/0346, G06F 3/0481, G02B 27/01

(54) **VERFAHREN ZUR DARSTELLUNG EINER VIRTUELLEN INTERAKTION AUF ZUMINDEST EINEM BILDSCHIRM UND EINGABEVORRICHTUNG**
METHOD FOR DISPLAYING A VIRTUAL INTERACTION ON AT LEAST ONE SCREEN AND INPUT DEVICE
PROCÉDÉ DE REPRÉSENTATION D'UNE INTERACTION VIRTUELLE SUR AU MOINS UN ÉCRAN AINSI QUE DISPOSITIF D'ENTRÉE

(30) Priorität: 16.05.2014 DE 102014106960
(43) Veröffentlichungstag der Anmeldung: 22.03.2017
(73) Patentinhaber: Padrone AG, 6330 Cham (CH)
(72) Erfinder: SPECK, Marc, CH-6300 Zug (CH)
(74) Vertreter: Schulz Junghans Patentanwälte PartGmbB
(86) Internationale Anmeldenummer: PCT/EP2015/060527
(87) Internationale Veröffentlichungsnummer: WO 2015/173271

(56) Entgegenhaltungen:
- DE-A1-102006 037 156
- US-A1- 2002 123 812
- US-A1- 2006 119 578
- US-A1- 2010 107 099
- US-A1- 2010 231 505
- US-A1- 2013 265 300
- MANOJIT SARKAR ET AL: "Graphical fisheye views of graphs", HUMAN FACTORS IN COMPUTING SYSTEMS, ACM, 2 PENN PLAZA, SUITE 701 NEW YORK NY 10121-0701 USA, 1 June 1992 (1992-06-01), pages 83-91, XP058125046, DOI: 10.1145/142750.142763 ISBN: 978-0-89791-513-7
- BENJAMIN B BEDERSON ED - NANCE W (ED): "Fisheye menus", PROCEEDINGS OF THE 2000 ACM SIGCPR CONFERENCE. CHICAGO. IL, APRIL 6 - 8, 2000; [ACM SYMPOSIUM ON USER INTERFACE SOFTWARE AND TECHNOLOGY], NEW YORK, NY : ACM, US, 1 November 2000 (2000-11-01), pages 217-225, XP058180301, DOI: 10.1145/354401.354782 ISBN: 978-1-58113-212-0
- KASPER HORNB K ET AL: "Untangling the usability of fisheye menus", ACM TRANSACTIONS ON COMPUTER-HUMAN INTERACTION, ACM, NEW YORK, NY, US, vol. 14, no. 2, 1 August 2007 (2007-08-01) , pages 6-es, XP058108665, ISSN: 1073-0516, DOI: 10.1145/1275511.1275512

## Beschreibung

Die vorliegende Erfindung befasst sich mit einem Verfahren zur Darstellung einer virtuellen Interaktion auf zumindest einem Bildschirm und mit einer Eingabevorrichtung, einem System und einem Verfahren für eine virtuelle Anwendung mittels einer Recheneinheit. Besonders bevorzugt wird die Erfindung im Zusammenspiel mit einem sogenannten kopfmontierten Bildschirm (HMD - engl.: Head Mounted Display) verwendet, mittels dessen das Sichtfeld des Trägers des HMD, dem Benutzer, die Realität vor seinen Augen durch virtuelle visuelle Darstellungen aufgewertet wird (AR - engl.: Augmented Reality). Im Folgenden werden die virtuellen visuellen Darstellungen nur als virtuelle Darstellungen bezeichnet, weil die Erfindung die visuelle Darstellung mittels zumindest einem Bildschirm, zum Beispiel in Form von einer graphischen Benutzerschnittstelle (GUI - engl.: Graphical User Interface), betrifft.

Aus dem Stand der Technik sind verschiedene Eingabedarstellungen beziehungsweise Interaktionsdarstellungen bekannt, die jeweils Vorteile und Nachteile aufweisen. Beispielsweise ist es bekannt, über einen berührungsempfindlichen Bildschirm (Touchscreen) Eingaben vorzunehmen, die durch mehr oder weniger intuitive Gesten eine relativ einfache Bedienung des auf dem Bildschirm dargestellten erlauben. Eine solche Eingabe hat den Vorteil, dass kein Cursor benötigt wird, also keine graphische Darstellung eines Anzeigers, wie zum Beispiel ein Mauszeiger, weil die Finger des Benutzers selbst im Sichtfeld des Benutzers die durch den Touchscreen übersetzte Interaktion ausführen. Eine solche Anwendung erfordert jedoch zum einen eine Einarbeitung in die teilweise komplexen Gesten und ist für Anwendungen ohne im natürlichen Bewegungsradius befindlichem Bildschirm nicht oder nur eingeschränkt übertragbar. Weiterhin werden die Bereiche des Bildschirms, die der Benutzer berührt, durch die Finger der Hand und eventuell durch die Handinnenfläche verdeckt. Dies erschwert die Bedienung und erfordert teilweise ein Erlernen der Position von Knöpfen einer GUI, zum Beispiel bei der Bedienung einer Tastatur mit einer Wischtechnik, wie zum Beispiel per Swype der Swype Inc..

Weiterhin ist es bekannt, mit Kameras, zum Teil Infrarot- (IR-) Kameras, dreidimensionale Aufnahmen von Körperteilen beziehungsweise der fixierten (IR-) Marker an Körperteilen, insbesondere von zumindest einer Hand, zu erstellen, die eine Echtzeitsteuerung einer GUI erlauben. Zusammen mit einem Bewegungsmodell werden die Bilder in eine virtuelle Darstellung der aufgenommenen Körperteile umgesetzt. Diese Technik hat zwei große Nachteile. Zum einen werden die Kameras an einem fixen Ort angeordnet und der Benutzer muss sich in diesem Sichtfeld bewegen. Zum anderen werden die aufgenommenen Körperteile derzeit durch ungeeignete Darstellungen, zum Beispiel der Körperteile selbst oder einem üblichen Cursor-Symbol, repräsentiert. Solche Darstellungen erschweren es dem Benutzer, mit diesen Darstellungen in der virtuellen Umgebung zu agieren und erfordern insbesondere einen Lernprozess.

Eine hilfreiche verbesserte 3D-Interaktionsmöglichkeit ist ein lokal unabhängiges Produkt, welches am Handgelenk zu montieren ist. In einer Variante wird mittels Kamera(s) die Bewegung der Finger ermittelt. In einer weiteren Variante wird mittels Ultraschall-Bewegungsmessung der Beugesehnen der Hand, die durch den Karpaltunnel gebündelt verlaufen, die Bewegung der Finger indirekt ermitteln. Bei beiden Varianten wird ein Bewegungsmodell der Hand hinterlegt. Leider sind diese Einrichtungen sperrig und hinderlich bei den sonstigen (realen) Tätigkeiten mit der Hand und/oder defizitär wegen einer beschränkten Bewegungsaufnahmefähigkeit, zum Beispiel durch Okklusionen (Verdeckungen des Sichtfelds).

Erst kürzlich hat es ein Produkt zur Marktreife gebracht, das in Form eines Fingerrings auf den Zeigefinger aufgeführt werden kann und mittels Bewegungssensoren eine relative Lageveränderung der Hand beziehungsweise des Zeigefingers registriert. Dieser Fingerring, der unter dem Namen Nod von der Nod Inc. vertrieben wird, weist zudem eine seitliche Berühreingabefläche (Touchpad) auf, um eine Eingabe zu erreichen. Dieser Fingerring unterscheidet sich jedoch von der bereits seit langem bekannten Wii^{™}-Fernbedienung der Firma Nintendo^{®} KK allein durch die am Finger tragbare Form. Die hiermit verbundene Eingabedarstellung ist traditionell und weist die oben geschilderten Nachteile der Notwendigkeit des Erlernens der Gesten und die damit einhergehende beschränkte Bedienung auf. Zudem gibt der Fingerring nur die absolute Bewegung des beringten Fingers, also bei einem einzigen Fingerring die Bewegung der gesamten Hand und der in der Regel beringten Phalanx proximalis, wieder.

Weitere relevante Beispiele für Stand der Technik sind:US 2013265300 A1, das ein System zur Interaktion mit einer virtuellen Umgebung mittels Handschuheingabegerät offenbart. Die Studie "Graphical fisheye views of graphs", ACM, 2 Penn Plaza, Suite 701, New York, NY, 10121-0701 USA, 1992-06-01, doi : 10.1145 / 142750.142763 ViewerXP, Manojit Sarkar; Marc H Brown ISBN 978-0-89791-513-7 ; ISBN 0-89791-513-5, offenbart eine verzerrende Visualisierungstechnik.

Die hier geschilderten Nachteile aus dem vorbekannten Stand der Technik werden mit der im Folgenden beschriebenen Erfindung zumindest teilweise gelöst.

Die Erfindung ist definiert im unabhängigen Anspruch 1.

Im Stand der Technik wird häufig ein sogenannter Cursor zur Darstellung des Anzeigers verwendet, der meist nicht leicht zu finden ist und nur einen einzigen Punkt zur gleichen Zeit markiert. Eine Übersetzung der Darstellung eines Anzeigers als Cursor auf mehrere Anzeiger ist häufig nicht möglich, ohne ein Erlernen der Bedienung vom Benutzer abzuverlangen.

Hier wird nun vorgeschlagen, die virtuelle Oberfläche, zum Beispiel eine GUI, eine Seite mit Text oder die Außenansicht eines Volumenkörpers, im Bereich des Anzeigers zu deformieren, zum Beispiel einzudellen. Wenn der Benutzer zum Beispiel ein virtuelles Papier anfasst, deformiert der zumindest eine Finger das Papier. Dies erscheint auf dem Bildschirm als Deformation, welche im Papier zum Beispiel vertieft ist. Zum Beispiel ist auch ein Anfassen von der hinteren Seite des Papiers her möglich, welche dann stattdessen beispielsweise hinausgewölbt dargestellt wird. Der Benutzer erfasst damit unmittelbar, dass er die virtuelle Oberfläche virtuell anfasst und eventuell manipulieren kann. Der Anzeiger wird durch die Deformation repräsentiert, welche somit den Cursor bildet, und es wird kein zusätzlicher Cursor benötigt und daher wird für diesen Anzeiger bevorzugt kein zusätzlicher klassischer Cursor angezeigt. Bei einer reinen Lageanzeige des Anzeigers ist die Deformation nicht dauerhaft, sondern verlagert sich relativ zum Koordinatensystem der virtuellen Oberfläche, also bevorzugt in der Oberflächenebene. Ein Abschnitt einer Oberflächenebene ist flach oder gekrümmt. Eine x-Achse und eine y-Achse eines aufspannenden Koordinatensystems liegen in der Oberflächenebene und eine z-Achse zeigt aus der Oberflächenebene heraus. Eine Verlagerung des Anzeigers ist, beziehungsweise bezeichnet, bevorzugt eine Verlagerung in der Oberflächenebene oder parallel zur Oberflächenebene. Weist die Oberflächenebene eine Krümmung auf, wird in einer Ausführungsform die z-Komponente einer Bewegung nicht berücksichtigt; gemäß der beanspruchten Erfindung wird die Deformation größer (zum Beispiel bei einer Eindellung beim Eintauchen) oder kleiner (zum Beispiel bei einer Eindellung beim Abheben), wenn die Verlagerung des Anzeigers relativ zur Oberflächenebene eine entsprechende z-Komponente aufweist. Je nach Art des virtuellen Objekts können auch beide Ausführungsformen in Abhängigkeit von der Art der virtuellen Oberfläche kombiniert ausgeführt werden. Besonders bevorzugt entspricht die Deformation einer errechneten Vertiefung, wie sie durch einen Finger in einem weichen Material hinterlassen würde. Ganz besonders bevorzugt bildet die umgrenzte Deformation einen Damm. Das heißt, das zum Bilden einer Vertiefung verdrängte Material bildet am Rand der Deformation einen hervortretenden Wulst, wie dies insbesondere bei einem inkompressiblen (elastischen) Material, zum Beispiel einem Kautschuk, auftreten würde.

Die virtuelle Oberfläche weist eine (virtuelle) Elastizität auf. Das heißt, die Teiloberfläche, die gerade noch durch die Lage des Anzeigers deformiert war kehrt langsam oder schnell, bevorzugt augenblicklich, wieder in die Nulllage zurück, also in die Oberflächenebene, welche ohne die Deformation durch den Anzeiger vorliegt. Diese Elastizität ist, falls dies für die konkrete Anwendung nützlich und/oder erwünscht ist, allein mittels einer Manipulation aufhebbar. Eine Manipulation ist eine das virtuelle Objekt verändernde Interaktion mit dem virtuellen Objekt. Das Gegenteil dazu ist die Lageanzeige, bei welcher das virtuelle Objekt nicht verändert wird, sondern lediglich die Lage des betreffenden Anzeigers mittels einer umgrenzten Deformation der betreffenden virtuellen Oberfläche angezeigt wird, welche bei einer Verlagerung des Anzeigers (in der Oberflächenebene) aufgehoben wird und an gegebenenfalls einer neuen Lage des Anzeigers wieder dargestellt ist. Die Deformation ist also nicht das Ziel der Interaktion, sondern lediglich die Darstellung der Interaktion. Aus der Sicht eines Programmierers werden das virtuelle Objekt und seine Eigenschaften bei der Lageanzeige nicht verändert. Lediglich die Darstellung des virtuellen Objekts wird mit der Deformationsinformation überlagert. Wird beispielsweise ein Koordinatenpixel einer virtuellen Oberfläche vorgegeben mit den Koordinaten x = 10, y = 10, z = 0 von einem virtuellen Objekt vorgegeben, und befindet sich an dieser Stelle ein Anzeiger, folgt daraus eine verlagerte Darstellung. Der Anzeiger beinhaltet zum Beispiel an der betreffenden Stelle zu dem betreffenden Zeitpunkt die Verlagerungsinformation Δx = +1, Δy = -1, Δz = -5. Dann wird die Darstellung dieses Koordinatenpixels auf x = 11, y = 9, z =-5 geändert. Ist der Anzeiger beziehungsweise eine Verlagerungsinformation wieder weg, wird die Darstellung wieder ohne die Überlagerung, also wie allein von der virtuellen Oberfläche vorgegeben, dargestellt.

Eine mögliche Darstellung einer Deformation, bevorzugt von zumindest einem Finger und/oder einer Hand, auf dem Bildschirm ist ein Schattenwurf, welcher bevorzugt die Form des zumindest einen Fingers und/oder einer Hand wiederspiegelt. Je nach Objekt in der (virtuellen) Umgebung des Anzeigers kann der Charakter der Deformation verändert werden, insbesondere die Form, Grösse, Trägheit, Farbe oder Textur.

Zum besseren Verständnis ein vergleichendes Beispiel: Die Deformation entspricht dem üblichen Mauspfeil, welcher mittels einer Computermaus bewegbar ist. Fährt der Mauspfeil beispielsweise über markierbaren Text, so verändert sich die Darstellung des Mauszeigers zu einem I-förmigen Strich, so dass der Benutzer weiß, dass der Text mit Gedrückthalten der linken Maustaste und anschließendem Darüberstreichen markiert werden kann. Ähnlich wird die Lage des Anzeigers hier als umgrenzte Deformation angezeigt, die also dem Mauspfeil entspricht, und es wird kein Mauspfeil und keine andere Darstellung dafür genutzt. Wird die Deformation an der gleichen Stelle verändert, zum Beispiel vertieft, wobei diese Form nun dem I-förmigen Strich der Computermaus entspricht, weiß der Benutzer, dass nun eine Manipulation am Objekt möglich ist. In diesem Beispiel bleibend, wäre ein Text bei dieser Änderung der Darstellung der Deformation durch über den Text Streichen markierbar. Abweichend vom Vergleichsbeispiel wird die geänderte Deformation vom Benutzer aktiv ausgelöst und entspricht bevorzugt zugleich dem Gedrückthalten der linken Maustaste, beispielsweise mittels einer Änderung der z-Koordinate des Anzeigers. Ergänzend oder abhängig von einer virtuellen Oberfläche kann auch eine Deformation ohne Eingabe vom Benutzer variiert werden, um auf die Möglichkeit einer Manipulation hinzuweisen.

Im Gegensatz zu einer reinen Lageanzeige kann eine mögliche virtuelle Manipulation ein Greifen oder Ziehen umfassen, zum Beispiel ein Zupfen, das wie bei einem realen Teig eine gezupfte Kegelform in der virtuellen Oberfläche hinterlässt. Auch kann die Manipulation ein Kneten mit bleibender Verformung umfassen. Für viele Anwendungen ist eine Manipulation in Form von Schieben, Drehen, Drücken, Ziehen, Scrollen, Blättern, Halten, Greifen oder ähnlichem hilfreich. Die virtuelle Manipulation stellt eine Unterfunktion der virtuellen Interaktion dar, wobei sich die Interaktion im Gegensatz zur virtuellen Manipulation beispielsweise auf die Darstellung der Lage (Lageanzeige) des zumindest einen Anzeigers beschränken kann.

Ganz besonders bevorzugt wird eine Mehrzahl von Anzeigern dargestellt, wobei die Anzeiger jeweils eine veränderbare Lage aufweisen. Jeder der Anzeiger wird durch eine entsprechende Deformation dargestellt. Bevorzugt wird dabei die Eigenschaft eines den Anzeiger generierenden Eingabemittels, zum Beispiel ein Finger, durch die Deformation widergespiegelt. Zum Beispiel wird die Größe der Deformation und/oder die relative Lage und relative Drehung der Anzeiger zueinander angepasst dargestellt.

Die Deformation wird mit der Verlagerung des Anzeigers ebenso in Echtzeit verlagert, beziehungsweise die Lage einer Deformation wird in vom menschlichen Auge nachvollziehbarer Geschwindigkeit (innert 100 ms [Millisekunden] bis einige Sekunden) an die neue Lage des Anzeigers angepasst und die vorherige Deformation aufgehoben. Dabei wird bevorzugt eine Bahn zwischen den Deformationen durch Interpolation errechnet und dementsprechend als sich entspannende Deformationstrajektorie angezeigt. Diese Deformationsanzeige ist besonders nützlich für eine Vielzahl von Anzeigern, wie es zum Beispiel bei der Verwendung der Hand als Eingabemittel der Fall ist.

Vorteilhaft ist hierbei insbesondere, dass eine nur geringe Beeinflussung der virtuellen Oberfläche dennoch eine gute Rückmeldung an den Benutzer erlaubt, so dass zum Beispiel ein Text weiterhin gut gelesen werden kann oder die Tasten einer virtuellen Tastatur stets erkennbar und unverdeckt bleiben.

Es sei an dieser Stelle darauf hingewiesen, dass das hier vorgeschlagene Verfahren besonders vorteilhaft in Echtzeit-Anwendungen verwendbar ist. Insbesondere soll der Benutzer eine (fast) verzögerungsfreie Wiedergabe seiner Interaktion mit der virtuellen Oberfläche erhalten, wie dies zum Beispiel bei derzeitigen Benutzer-Anwendungen mit Cursor der Fall ist. Ist die Übersetzung nicht ganz verzögerungsfrei, wird entweder dem Benutzer ein entsprechender Hinweis gegeben oder die Verzögerung befindet sich in einem (eventuell nicht wahrgenommenen) akzeptablen Zeitrahmen, bevorzugt im Millisekundenbereich.

Ein besonderer Vorteil der Echtzeitanwendung ist die kontinuierliche Rückmeldung der Handlung des Benutzers, die besonders erfreut aufgenommen werden, weil die Darstellung durch Deformationen als überraschend und positiv aufgenommen wird. Die virtuelle Interaktion fühlt sich dadurch wie eine reale Interaktion an und reizt den Spieltrieb im Menschen. Hierdurch wird die virtuelle Interaktion noch intuitiver und kann in höchster Präzision betrieben werden.

Die virtuelle Interaktion mit einer virtuellen Oberfläche kann sich auf eine Lageanzeige beschränken. Es können aber auch, insbesondere mittels einer GUI, Hintergrundprozesse ausgelöst werden, die dem Benutzer nicht unmittelbar angezeigt werden müssen, zum Beispiel wenn sich die Finger des Benutzers einem Link in einem Internet Browser nähern, kann der Browser den Seiteninhalt des Links im Hintergrund laden.

Gemäß einer vorteilhaften Ausführungsform wird bei der Texteingabe von Hand mittels einer virtuellen Tastatur nicht nur die Position der Berührung der Fingerspitze auf der (Tisch-) Oberfläche berücksichtigt, sondern auch der zeitliche Verlauf der Bewegungen der Finger, die räumliche und zeitliche Wahrscheinlichkeitsverteilung von Positionen, Geschwindigkeiten und Beschleunigungen der Knochen und Glieder der Hand zum jeweiligen Zeitpunkt, der sprachlichen Zusammenhang aus der Textanalyse, das spezifische, gelernte Verhalten des Benutzers und/oder das Geräusch des Tippens auf der Oberfläche. Die Position einer Taste ist somit nicht starr auf einer Oberfläche verankert, sondern passt sich, bevorzugt dynamisch, dem Verhalten des Benutzers an.

Gemäß einer vorteilhaften Ausführungsform des Verfahrens wird mittels einer Benutzereingabe die aktuell umgrenzte Deformation verändert und/oder eingefroren und diese Benutzereingabe wird in eine entsprechende virtuelle Interaktion übersetzt.

Die Benutzereingabe ist zum Beispiel eine Veränderung der Lage des Anzeigers in einer Normalrichtung zur virtuellen Oberfläche, zum Beispiel ein Hineindrücken oder Herausziehen, und dabei zum Beispiel ein Überschreiten eines Abstandsgrenzwerts. Die Deformation wird dadurch beispielsweise vertieft beziehungsweise erhöht und/oder die Farbe der Oberfläche im Bereich des Anzeigers und/oder der (vorherigen) Deformation verändert. In einem anderen Beispiel wischt der Benutzer mit einer erhöhten Geschwindigkeit den Anzeiger über die virtuelle Oberfläche und erzeugt somit eine von der normalen Geschwindigkeit abweichende modifizierte Deformation. Dafür ist dann beispielsweise ein Geschwindigkeitsgrenzwert festgelegt. Der Art und Weise der Veränderung der Deformation durch eine Benutzereingabe sind keine Grenzen gesetzt, jedoch sollte vorteilhafterweise auf Effekte in der realen Umwelt oder bereits allgemein anerkannte, also erlernte, Interaktionsdarstellungen im Zusammenhang mit rechnergestützten Anwendungen zurückgegriffen werden. Damit wird das Bedienen mittels des hier vorgeschlagenen Verfahrens besonders intuitiv.

Der Benutzer erhält somit eine Rückmeldung über eine mögliche Interaktion mit der Oberfläche, beispielsweise das Drücken einer Taste einer virtuellen Tastatur. Die Deformation wird dann zum Beispiel abweichend von natürlichen physikalischen Deformationen verändert, zum Beispiel farblich, und/oder in der aktuellen Form eingefroren und für eine vorbestimmte Zeit oder bis zur aktiven Auflösung durch den Benutzer in diesem Deformationszustand gehalten. Mittels der Veränderung der Deformation wird dem Benutzer eine Rückmeldung über die vorliegende Benutzereingabe gegeben.

Gemäß einer vorteilhaften Ausführungsform des Verfahrens ist eine Mehrzahl von virtuellen Oberflächen vorgesehen, die zumindest ein virtuelles Objekt bilden, wobei eine Mehrzahl von Anzeigern vorgesehen sind, die jeweils durch eine umgrenzte Deformation angezeigt werden, wobei bei einer entsprechenden Änderung zumindest einer der umgrenzten Deformationen das virtuelle Objekt manipulierbar ist, bevorzugt ausgelöst durch eine Benutzereingabe mittels veränderter und/oder eingefrorener Deformation gemäß obiger Beschreibung.

Bei dieser Ausführungsform wird ein virtuelles Objekt intuitiv manipulierbar, wobei das virtuelle Objekt dem Benutzer als eine virtuelle Darstellung eines realen Objekts erscheint, zum Beispiel eine Buchseite, ein Würfel oder jegliche andere Form. Hierzu können eine Mehrzahl von Anzeigern genutzt werden, die jeweils einzeln oder gemeinsam auf das virtuelle Objekt einwirken können. Die entsprechende Änderung der zumindest einen Deformation ist von der Eigenschaft des virtuellen Objekts abhängig, die diesem Objekt durch eine Programmierung gegeben wurde. Die Änderung ist jedenfalls für den Benutzer ein deutlicher Hinweis, dass eine Manipulation vorgenommen werden kann oder wird. Hierzu ist es besonders vorteilhaft, wenn das virtuelle Objekt ein virtuelles Gewicht aufweist und zum Manipulieren des Objektes entsprechende virtuelle Kräfte aufgebracht werden müssen. Zum Beispiel könnte ein relativ schwerer virtueller Klotz in der virtuellen Umgebung nur mittels des Einsatzes mehrerer Anzeiger aus seiner Ruhelage geschoben oder gehoben werden. Oder die virtuelle Taste einer virtuellen Tastatur könnte eine virtuelle Rückstellfeder aufweisen, die sich nur bei Einbringung einer erforderlichen virtuellen Kraft auslenken lässt und somit erst dann der entsprechende Befehl der Taste ausgelöst werden. Vorteilhafter Weise wird die Interaktion mit dem virtuellen Objekt dem Benutzer, bevorzugt in Echtzeit, stets visuell dargestellt. Der Art und Weise der virtuellen Manipulation und notwendigen entsprechenden Änderung der Deformation durch eine Benutzereingabe sind keine Grenzen gesetzt, jedoch sollte vorteilhafterweise auf Effekte in der realen Umwelt oder bereits allgemein anerkannte, also erlernte, Manipulationsdarstellungen im Zusammenhang mit rechnergestützten Anwendungen zurückgegriffen werden. Damit wird das Bedienen mittels des hier vorgeschlagenen Verfahrens besonders intuitiv.

Im Gegensatz zu bisher bekannten Verfahren ist es hier möglich, eine Mehrzahl von Anzeigern zu verarbeiten und dem Benutzer anzuzeigen, ohne dass die Sicht auf das zu manipulierende Objekt verdeckt wird. Im Stand der Technik wird mit einem einfachen Cursor nur an einem Ort eine Interaktion ausgeführt oder die Sicht wird durch die reale Hand oder eine virtuelle Handdarstellung verdeckt. Eine nun ermöglichte Interaktion mit mehreren Fingern erlaubt hingegen gleichzeitig mehrere Interaktionen am gleichen oder verschiedenen Orten. Beispielsweise kann der Benutzer mit seinen Fingern einen virtuellen Farbstift gleichzeitig an mehreren Orten in einer komplexen Bewegung berühren und manipulieren. Mit einem Cursor könnte er den virtuellen Farbstift nur an einer Stelle zu einer Zeit berühren und könnte ihn somit nicht einmal hochheben. Eine vergleichbare komplexe Bewegung ist nur mit einem Sensorstift, wie er beispielsweise von der Firma Wacom Inc. angeboten wird, ermöglicht, wobei dieser an eine ortsfeste Eingabefläche gebunden ist. Die Verwendung mehrerer Finger erlaubt also eine deutlich komplexere Bewegungsvielfalt und sehr präzise Bewegungen in einer virtuellen Umgebung.

Gemäß einer vorteilhaften Ausführungsform des Verfahrens ist die umgrenzte Deformation und/oder die Verweildauer der umgrenzten Deformation abhängig von der virtuellen Materialeigenschaft der virtuellen Oberfläche, wobei bevorzugt die virtuelle Materialeigenschaft durch den Benutzer veränderbar ist.

Besonders intuitiv wird die Bedienung durch die Zuweisung von virtuellen Materialeigenschaften zu einer jeweiligen virtuellen Oberfläche oder einem virtuellen Objekt. Beispielsweise könnte eine Oberfläche, die keine Bedienung erlaubt aus einem steifen Material gebildet sein, so dass der Benutzer erkennt, dass dort keine Eingabe möglich ist. In anderen Bereichen hingegen könnte ein besonders weiches elastisches Material eingesetzt werden, so dass der Benutzer erkennt, dass dort eine Manipulation möglich ist. Je nach erwünschter Bedienoberfläche für den Benutzer kann auch eine Mischung verschiedener Materialeigenschaften eingesetzt werden. Besonders bevorzugt ist die Eigenschaft zumindest einer virtuellen Oberfläche durch den Benutzer veränderbar, der somit zum Beispiel ein unbeabsichtigtes Eingeben einer virtuellen Interaktion über eine gerade nicht im Zentrum der Beachtung durch den Benutzer stehende virtuelle Oberfläche verhindert. Beispielsweise sperrt der Benutzer eine virtuelle Tastatur und verhindert so eine unbeabsichtigte Eingabe.

Gemäß einer vorteilhaften Ausführungsform des Verfahrens ist ein Abstandsgrenzwert des Anzeigers zu der zumindest einen Oberfläche definiert, wobei bei einer Unterschreitung des Abstandsgrenzwerts die umgrenzte Deformation verändert wird und bei einer Verlagerung des Anzeigers eine virtuelle kinetische Aktion auf die Oberfläche möglich ist, und wobei bei einer Überschreitung des Abstandsgrenzwerts die Oberfläche ruht und eine Verlagerung des Anzeigers zu einer Verlagerung der umgrenzten Deformation relativ zur Oberfläche führt.

Eine kinetische Aktion auf eine Oberfläche umfasst bevorzugt auch eine kinetische Aktion gegen eine Oberfläche und/oder mit einer Oberfläche. Mittels dieser Ausführungsform wird zum Beispiel eine intuitiv verständliche Darstellung eines Greifens möglich, auch ohne dass der Benutzer eine taktile Rückmeldung über das Anfassen einer virtuellen Oberfläche erhält. Im folgenden Beispiel wird zum besseren Verständnis die unverformte Oberfläche als flache x-y-Ebene eines kartesischen Koordinatensystems definiert, wobei die z-Achse aus der Oberfläche, zum Beispiel in Richtung des Benutzers, herauszeigt und beim Schnittpunkt mit der virtuellen Oberfläche ihren Nullpunkt hat. Befindet sich der Anzeiger in einer Lage, in der die virtuelle Oberfläche nicht manipulierbar ist, wird die Oberfläche im Bereich des Anzeigers mit zum Beispiel einem Quadratzentimeter Fläche dellenförmig im Maximum um -1 mm [Millimeter] zum Nullpunkt der z-Achse deformiert, also eine Vertiefung geformt. Diese Deformation dient in diesem Beispiel lediglich der Anzeige der Lage des Anzeigers. Wird vom Benutzer eine Manipulation erwünscht, bewegt er den Anzeiger entlang der negativen z-Achse in die virtuelle Oberfläche hinein, zum Beispiel um einen Betrag von 1 mm. Daraus folgt zum Beispiel, dass die entsprechende Deformation im Maximum auf -2 mm vertieft wird. Diese visuelle Rückmeldung ermöglicht dem Benutzer zu erkennen, dass er nun genügend virtuelle Kraft auf die virtuelle Oberfläche einbringt, um die virtuelle Oberfläche zu manipulieren. Zum Beispiel wird die virtuelle Oberfläche nun seiner Bewegung folgen, also zum Beispiel verschiebbar. Das heißt, zwischen dem Anzeiger und der virtuellen Oberfläche findet in diesem Zustand zumindest im Bereich der Deformation keine relative Verschiebung statt; zum Beispiel lässt sich eine virtuelle Buchseite in diesem Manipulationszustand durch Verschieben des Anzeigers umblättern. Bei einer Überschreitung des Abstandsgrenzwertes, zum Beispiel bei den -2 mm hin zu den -1 mm, findet hingegen bei einer Verlagerung des Anzeigers eine relative Verschiebung (Verlagerung)zwischen der virtuellen Oberfläche und der Deformation statt. Dann wird die virtuelle Oberfläche nicht manipuliert und ist in diesem Beispiel in der virtuellen Umgebung ortsfest. Der Benutzer erhält so außerdem durch die Reaktion der virtuellen Oberfläche eine Rückmeldung über den Erfolg seiner beabsichtigten Eingabe. Alternativ oder ergänzend wird die Deformation bei einer Unterschreitung des Abstandsgrenzwertes farblich verändert, zum Beispiel wie bei durchsichtigem klarem PMMA-Material, das unter Induzierung von Spannung (infolge von Druckkraft) im Bereich der Verformung milchig wird. In einer besonders vorteilhaften Ausführungsform vibriert eine Teiloberfläche, die manipulierbar ist, wenn der Anzeiger über diese Teiloberfläche streicht. Alternativ oder ergänzend vibriert eine manipulierbare Teiloberfläche beim erstmaligen Anzeigen der virtuellen Oberfläche.

Gemäß einer vorteilhaften Ausführungsform des Verfahrens repräsentiert eine Teiloberfläche eine Schaltvorrichtung, wobei bei einer Überschreitung einer Deformation und/oder bei einer Unterschreitung eines Abstandsgrenzwertes gemäß der obigen Beschreibung die Teiloberfläche eine optische Rückmeldung erzeugt.

Die Schaltvorrichtung ist beispielsweise ein virtueller Knopf, der bei einer Unterschreitung des Abstandsgrenzwerts insgesamt vertieft wird. Es kann aber auch jegliche andere Reaktion wie zum Beispiel eine Vibration, eine Veränderung der Materialeigenschaft oder dergleichen bei einer Unterschreitung des Abstandsgrenzwertes ausgelöst werden.

Gemäß einer vorteilhaften Ausführungsform des Verfahrens wird die umgrenzte Deformation mittels zumindest eines Fingers vorgenommen.

Bei dieser bevorzugten Ausführungsform wird ein Anzeiger über einen Finger des Benutzers direkt gesteuert und die umgrenzte Deformation zeigt dem Benutzer die (relative) Lage seines Fingers in der virtuellen Umgebung an. Bei Anwendungen mit einem oder mehreren Fingern als Eingabemittel wird im Stand der Technik der zumindest eine Anzeiger häufig als Darstellung eines Fingers beziehungsweise einer Hand dargestellt. Diese Darstellung wird jedoch häufig als fremd wahrgenommen und verdeckt insbesondere ungünstig viel der virtuellen Oberfläche. Mit der hier vorgeschlagenen Deformation als Übersetzung des entsprechenden Anzeigers kann die tatsächliche Lage in der virtuellen Umgebung dargestellt werden, ohne etwas zu verdecken. Darüber hinaus wird die Deformation bei geeigneter Darstellung als natürlich wahrgenommen und vom Benutzer als seine Interaktion mit der virtuellen Oberfläche akzeptiert.

Die Lagedarstellung des zumindest einen Fingers mittels Deformation kann, wie dies vom Grundprinzip bei einer Computerschnittstelle als Zeichenbrettbedienung der Fall ist, angezeigt werden, also als relative Raumlage zu einer definierten Eingabefläche. Alternativ kann die relative Lage des Fingers zu einer definierten Eingabefläche unbeachtet bleiben und nur die Abweichung von einem definierten Ausgangspunkt (zum Beispiel im Initialzeitpunkt, zum Beispiel Starten des Computersystems, die Mitte eines Bildschirms) registriert werden, wie das bei einer Mausinteraktion der Fall ist.

Bevorzugt entspricht die umgrenzte Deformation der Form und Größe eines üblichen Fingers oder des aktuell benutzten Fingers, wobei in letzterem Falle zum Beispiel bei einem Kind die Deformation kleiner als bei einem Erwachsenen wäre. Für andere Anwendungen ist es hingegen nützlich, die Größe der Deformation an die aktuelle Anwendung anpassen zu können, wenn hier zum Beispiel eine besonders feine Bearbeitung notwendig ist.

Gemäß einer vorteilhaften Ausführungsform des Verfahrens bewirkt eine Mehrzahl von Fingern jeweils eine umgrenzte Deformation und mittels der Mehrzahl von Fingern ist zumindest ein virtuelles Objekt greifbar.

Bei dieser vorteilhaften Ausführungsform ist ein virtuelles Objekt, gebildet durch zumindest eine virtuelle Oberfläche, mithilfe mehrerer Anzeiger manipulierbar, wobei die Anzeiger jeweils einen Finger repräsentieren. Diese Art des Greifens ist für den Benutzer ohne ein Erlernen von künstlichen Gesten unmittelbar verständlich. Die Finger werden dann, wie oben beschrieben, beispielsweise mittels Unterschreitung eines Abstandsgrenzwertes zwischen dem virtuellen Objekt und den die Finger repräsentierenden Anzeigern in Form von umgrenzten Deformationen zum Greifen des virtuellen Objekts verwendet. Das virtuelle Objekt ist beispielsweise eine GUI, eine Tastatur, eine geometrische Form, ein virtueller Bildschirm zur Anzeige von Informationen in einer AR-Umgebung oder ähnliches. Die virtuelle Interaktion kann ein Verlagern des virtuellen Objekts, ein Vergrößern beziehungsweise Verkleinern des virtuellen Objekts, eine Befehlseingabe (Drücken eines Knopfs) oder dergleichen sein.

Die Offenbarung umfasst weiterhin eine Eingabevorrichtung für eine virtuelle Anwendung mittels einer Recheneinheit, wobei die Eingabevorrichtung bevorzugt als Ring ausgeführt ist, wobei der Ring zumindest die folgenden Komponenten aufweist:
- eine Befestigungseinrichtung zum passgenauen Befestigen der Eingabevorrichtung beziehungsweise des Rings an einem Finger;
- eine Aufnahmeeinheit zur Erstellung von Aufnahmedaten der relativen Lage zumindest eines Fingers einer Hand zur Eingabevorrichtung und/oder zu zumindest einem weiteren Bestandteil der Hand und/oder zu einer realen Oberfläche, wenn die aktivierte Eingabevorrichtung an dem Finger mittels der Befestigungseinrichtung befestigt ist;
- eine interne Recheneinheit zur Verarbeitung der Aufnahmedaten;
- eine Transmittereinheit zum Versenden der Verarbeiteten Aufnahmedaten der Recheneinheit,
wobei mittels besagter Aufnahmedaten mittels der internen und/oder einer externen Recheneinheit zumindest eine entsprechende virtuelle Interaktion erzeugbar ist.

Die Eingabevorrichtung ist dazu vorgesehen, Bewegungen einer Hand in eine Eingabe in eine rechnergestützte virtuelle Umgebung derart einzubinden, dass mit dieser virtuellen Umgebung interagiert werden kann. Das heißt, dass zum Beispiel eine Office-Anwendung durch Tippen mit den Fingern ohne Tastatur, Zeichnen oder Modellieren in einer Zeichenanwendung, Blättern virtueller Seiten, Computerspiel-Anwendungen und vieles mehr mittels der Eingabevorrichtung mittels der Hand bedienbar wird. Ein bahnbrechender Vorteil dieser Eingabevorrichtung ist, dass weder eine externe Kamera benötigt wird noch störendes Equipment am Körper getragen werden muss. Darüber hinaus ist mit dieser Eingabevorrichtung eine gänzlich neuartige Bedienung möglich, die nachfolgend im Zusammenhang mit den Verfahren vorgestellt werden wird.

Gegenüber externen Eingabevorrichtungen, wie Kameras an einem Bildschirm oder in einem HMD, ist es mit der Eingabevorrichtung nicht notwendig, die Hand in einem (unbequemen) Sichtfeld zu führen. Ermüdung und krankheitsverursachende Dauerfehlhaltungen können daher vermieden werden. Es können sogar in einer bevorzugten Ausführungsform bei ein und derselben Interaktion unterschiedliche Lagen der Hand gewählt werden. Ein Vorteil der Eingabevorrichtung ist, dass die Hand in der natürlichen Position gehalten werden kann. Der Gelenkapparat der Hand und des Arms wird minimal belastet, was Krankheiten wie das Karpaltunnelsyndrom verhindern oder lindern kann. Dies ist sogar bei einem Touchpad oder einer Computermaus nicht uneingeschränkt möglich. Darüber hinaus ist die Eingabevorrichtung nahe bei den Fingern, und insbesondere dem Zeigefinger und dem Daumen, angeordnet, so dass präzise feine Bewegungen ohne großen technischen Aufwand erfasst werden können und entsprechend in einer virtuellen Umgebung ebenso präzise und fein umgesetzt werden können. Dies erlaubt auch eine deutlich feinere Interaktion mit einer virtuellen Oberfläche, zum Beispiel für CAD-Anwendungen oder für Fotobearbeitungen. Es können aber auch ohne Einschränkungen bereits geübte, gewohnte Haltungen eingenommen werden, wie zum Beispiel beim Tippen auf einer Tastatur.

Zunächst weist die Eingabevorrichtung eine Befestigungsvorrichtung auf, mittels der die gesamte Eingabevorrichtung an der Hand, bevorzugt an einem Finger, lösbar befestigt werden kann. Das bedeutet, dass alles, was die Eingabevorrichtung umfasst an der Hand, bevorzugt an dem Finger, befestigt ist. Bevorzugt ist die Eingabevorrichtung dabei derart klein beziehungsweise dünn gestaltet, dass sie bei anderen zum Beispiel alltäglichen, also zum Beispiel realen, Handbewegungen nicht hinderlich ist.

Gemäß der Erfindung umfasst die Eingabevorrichtung eine Aufnahmeeinheit, die zur Erstellung von Aufnahmedaten der relativen Lage zumindest eines Fingers einer Hand zur Eingabevorrichtung und/oder zu zumindest einem weiteren Bestandteil der Hand und/oder zu einer realen Oberfläche eingerichtet ist, wenn die aktive Eingabevorrichtung an der Hand, bevorzugt an dem Finger, mittels der Befestigungseinrichtung befestigt ist. Das heißt, die Eingabevorrichtung ist durch ein korrektes Befestigen so eingerichtet, dass die Aufnahmeeinheit Aufnahmedaten von zumindest einem Finger erstellen kann. Beispielsweise weist die Eingabevorrichtung zur korrekten Befestigung eine optisch und/oder haptisch wahrnehmbare Markierung auf, zum Beispiel eine Kerbe und/oder eine farbliche Kennzeichnung.

Es sei an dieser Stelle darauf hingewiesen, dass die Aufnahmeeinheit zur Aufnahme, also im Weiteren Sinne zur Erkennung, zumindest eines Teiles des zumindest einen Fingers und gegebenenfalls anderer Bestandteile der Hand eingerichtet ist. Das heißt, dass die im Aufnahmebereich liegende Form beziehungsweise zunächst die Oberfläche und Ihre jeweilige ausrichtungsabhängige Reflexionseigenschaft aufgenommen wird. Diese Aufnahmedaten erlauben einen geometrischen Vergleich mit einem virtuellen Handmodell. Die Aufnahmeeinheit nimmt nicht (allein) Abstände auf, zum Beispiel nach dem Reflexionsprinzip eines Sonars. Bevorzugt werden Abstände indirekt durch den Vergleich mit einem Handmodell und Größenverhältnisse der Aufnahmedaten ermittelt. Die Aufnahmeeinheit ist also mit anderen Worten dazu eingerichtet, eine Art Abbild (von Teilen) des zumindest einen Fingers zu erzeugen.

Die Aufnahmedaten ermöglichen auf Basis eines Handmodells die Erfassung der relativen Lage des zumindest einen aufgenommenen Fingers relativ zur Eingabevorrichtung und/oder, wenn auch noch ein weiterer Bestandteil derselben Hand, zum Beispiel ein Teil der Handinnenfläche oder ein weiterer Finger beziehungsweise der Daumen, aufgenommen wird, relativ zu zumindest einem weiteren Bestandteil der Hand. Wird nun eine Veränderung der relativen Lage des zumindest einen Fingers erfasst, werden diese Bewegungsdaten, zumindest mithilfe eines hinterlegten Bewegungsmodells einer Hand, in Eingabedaten umgesetzt. Beispielsweise wird eine Kippbewegung eines Fingers als Tipp-Eingabe auf einer virtuellen Tastatur verwendet. Beispielsweise wird eine Streckbewegung eines Fingers als Drückeingabe für einen virtuellen Knopf verwendet. Beispielsweise wird ein Krümmen eines oder mehrerer Finger zur Handinnenfläche als Greifbewegung zum Ergreifen eines virtuellen Objekts verwendet. In einer vorteilhaften Ausführungsform sind ein oder mehrere Sensoren in der Eingabevorrichtung angeordnet, welche zum Messen der Distanz zu Objekten in der Umgebung eingerichtet ist, zum Beispiel zu einem Stift, zu einem Radiergummi, zu einer Tischplatte und/oder zu einer oder mehreren Wänden im Raum. Einfache Sensoren können zur Distanzmessung vorbekannte Verfahren wie beispielsweise Triangulation oder Laufzeitmessung von elektromagnetischen Wellen, insbesondere Lichtwellen, oder Ultraschallwellen nutzen. Zum Beispiel mit zumindest einem Bildsensor kann durch Stereo-Vision oder durch die Erkennung eines pseudo-zufälligen Lichtmusters eine Tiefenbild erzeugt werden. Die Eingabevorrichtung ist bevorzugt nicht nur dazu eingerichtet, die Finger der tragenden Hand als für eine virtuelle Interaktion relevante Objekte zu erkennen, sondern auch Gegenstände in der näheren Umgebung wie die Tischplatte oder einen Stift oder ein Radiergummi in der Hand. Die Lage dieser Gegenstände relativ zur Eingabevorrichtung beziehungsweise zur erfassten Hand wird dann erfasst. Hält der Benutzer beispielsweise einen Stift in der Hand, so wird ein virtueller Stift auf dem Bildschirm angezeigt, in einer Ausführungsform mit exakt der Größe und Farbe. Hält der Benutzer einen Stift in der Hand, ist die Eingabevorrichtung dazu eingerichtet, die Bewegung des Stifts zu erkennen und Text oder Zeichnungen aufzunehmen, welche gerade von der tragenden Hand (virtuell oder reell) geschrieben werden. In einer Ausführungsform weist der benutzte Stift eigene Sensoren auf, welche kontinuierlich oder in bestimmten Zeitabständen die Position des Stifts erfassen. Dabei wird die eigene Bewegung des Stifts erfasst und/oder die Veränderung der Position relativ zur zumindest einen Eingabevorrichtung und/oder zum zumindest einen Bildschirm. Diese Objekte können entweder als Objektklasse (zum Beispiel "Stift") oder spezifisch (zum Beispiel "mein roter Stift") identifiziert werden. Zur Identifikation ist eine Kamera der Eingabevorrichtung oder ein Sensor für einen Identifikator am Stift, zum Beispiel einen Barcode, einen Near Field Communication-Chip (NFC) oder ähnliche Kommunikationsmittel nutzbar. In einer Ausführungsform ist ein Bildschirm wie ein Touchscreen benutzbar, welcher keine vorbekannten Touchscreensensoren, wie zum Beispiel einen kapazitiven oder resistiven Berührungssensor oder eine Lageerfassungskamera, aufweist. Sobald die Lage die Eingabevorrichtung zu dem Bildschirm bekannt ist, ermöglichen die Daten der Eingabevorrichtung den Bildschirm wie einen Touchscreen zu benutzen: Sobald ein oder mehrere Finger den Bildschirm berühren, wird dies als Touch-Ereignis interpretiert.

Es sei an dieser Stelle darauf hingewiesen, dass für viele Stellungen des zumindest einen Fingers die Aufnahme eines Teils des Fingers und/oder sogar eines anderen Bestandteils der Hand ausreichend sind. Die Lage des zumindest einen Fingers wird mittels der aufgenommenen Teilfläche des Fingers und/oder Bestandteilen der restlichen Hand durch einen Abgleich mit einem gespeicherten Handmodell ermittelt. Die Selektion der Parameter aus dem Handmodell welche übermittelt werden, kann permanent angepasst werden. Typischerweise reicht die Übermittlung der Position der Fingerspitzen und die Richtung des vordersten Fingergliedes aus. Die räumliche und zeitliche Wahrscheinlichkeitsverteilung von Positionen, Geschwindigkeiten und Beschleunigungen der Knochen und Glieder der Finger und der Hand können für die Berechnung des Handmodells miteinbezogen werden. Die Wahrscheinlichkeitsverteilungen können aufgrund von vergangenen Bewegungsabläufen jederzeit angepasst werden. Solche Verteilungen können in der Eingabevorrichtung, in der externen Recheneinheit und/oder in weiteren externen Quellen, bevorzugt zugehörig zu einem Benutzerprofil, gespeichert sein.

In einer Ausführungsform wird ein oder mehrere (konventionelle(r)) Touchscreen(s) und/oder Bildschirm(e), bevorzugt mit mehreren Druckstufen, in Kombination mit der Eingabevorrichtung verwendet. Die separaten Eingaben über den Touchscreen und/oder Bildschirm und die Eingabevorrichtung werden bevorzugt gleichzeitig verarbeitet. In einer Ausführungsform wird die im Koordinatensystem der Eingabevorrichtung absolute Position der Eingabevorrichtung zu einem Gegenstand wie zum Beispiel einem HMD, Tablet, Laptop oder Uhr berechnet. Aus dieser absoluten Position wird dann die Position von anderen Körperteilen, wie zum Beispiel des Ellbogens oder der Schulter, berechnet. In einer Ausführungsform ist die Eingabevorrichtung derart eingerichtet, dass die Eingabevorrichtung zusätzlich zu den vorgenannten Funktionen mittels elektromagnetischer Sender (zum Beispiel iBeacon) erfassbar ist. Diese Funktion ist in einem Raum beziehungsweise in einer Umgebung mit elektromagnetischen Sendern (zum Beispiel iBeacon) zur Ortung der absoluten Raumposition der Eingabevorrichtung nutzbar. Dies ist für einige zusätzliche und/oder spezielle Anwendungen nützlich.

Es wird eine solche Aufnahmeeinheit bevorzugt, die keinen negativen Einfluss auf benachbarte (elektronische) Geräte hat, wie dies zum Beispiel bei einem Magnetfeld der Fall wäre. Ganz besonders wird eine passive Aufnahmeeinheit bevorzugt, die natürliche Reflektionen elektromagnetischer Strahlung, zum Beispiel Licht, nutzt, wobei die Reflektion durch ein Aussenden entsprechender Strahlung verstärkt werden kann. Auch in letzterem Fall werden die meisten (elektronischen) Geräte durch das Aussenden entsprechender Strahlung nicht gestört, weil sich die Strahlung in einem natürlich vorkommenden Bereich befindet oder diesen nur leicht überschreitet und die (elektronischen) Geräte gegen solche Strahlung gesichert ausgelegt werden.

Zur Aufbereitung oder Verarbeitung der Aufnahmedaten ist in der Eingabevorrichtung eine Recheneinheit vorgesehen, die zum Beispiel einen Prozessor und einen Arbeitsspeicher, und eventuell zum Beispiel einen Festkörperspeicher, umfasst. In einer besonders schlanken Ausführung der Eingabevorrichtung werden die Aufnahmedaten inhaltlich unverarbeitet zur Versendung mit dem Transmitter formatiert, zum Beispiel in Datenpakete für eine Bluetooth^{®}-Übermittlung oder Zigbee-Übermittlung unterteilt und für die Übermittlung entsprechend des Übermittlungsprotokolls verschlüsselt. Es sind Verarbeitungen nach dem Internet Protocol (IP) möglich und zum Beispiel eine Versendung per WLAN-Übermittlung, wobei hier vor allem die Vergrößerung der Übermittlungsreichweite erzielt wird. Es kann auch eine Übermittlung im Mobilfunkstandard, wie zum Beispiel einem UMTS-Standard oder LTE genutzt werden. Für eine Verwendung mit einem HMD ist eine Reichweite von bis zu 2 m [Meter] vollkommen ausreichend und daher ist der wenig störanfällige Bluetooth^{®}-Standard ein bevorzugter Übermittlungsstandard. Infrarot-Übermittlung (IrDA) ist eher ungeeignet, weil dafür Sichtkontakt gehalten werden muss und eine Bewegung der Hand dadurch eingeschränkt wird. Aber auch diese Übertragungstechnik ist nicht in jeder möglichen Anwendung nachteilig. Der Transmitter beziehungsweise ein weiterer Transmitter ist bevorzugt nicht nur für ein elektromagnetisches Fernfeld, wie zum Beispiel bei Bluetooth^{®}, eingerichtet, sondern auch für ein Nahfeld wie zum Beispiel bei magnetischer Induktion (englisch: Near-Field Magnetic Induction, NFMI). Die IrDA und NFMI-Übertragung eignet sich vor allem für eine Aktivierung der Eingabevorrichtung, für zum Beispiel einen Interaktionsbefehl, mittels Halten der Eingabevorrichtung an eine Empfangsstation.

Die Eingabevorrichtung weist in einer Ausführungsform neben dem Transmitter auch einen Empfänger (englisch: Receiver) für elektromagnetische Signale auf. Hierfür ist bevorzugt dieselbe Antenne für den Transmitter und Receiver als sogenannter Transceiver eingerichtet.

Die Eingabevorrichtung weist bevorzugt eine eindeutige Identifikation (ID) auf. Beliebige Daten können mit dieser ID verknüpft werden, zum Beispiel Name, Adresse, Kreditkartendaten. Die Daten sind in der Eingabevorrichtung, in der externen Recheneinheit und/oder einer anderen externen Quelle gespeichert.

Alle Komponenten der Eingabevorrichtung sind bereits grundsätzlich bekannt und haben sich als robust und alltagstauglich bewährt, so dass ein Benutzer mit der Eingabevorrichtung ungestört seinen alltäglichen Handlungen nachgehen kann. Besonders vorteilhaft ist sogar der Kontakt mit Wasser unbedenklich, so dass die Eingabevorrichtung nicht oder nur selten abgelegt werden muss, damit sie nicht beschädigt wird.

Es sei dabei darauf hingewiesen, dass die Eingabevorrichtung besonders bevorzugt für Echtzeitanwendungen eingerichtet ist. Das heißt die Bewegung des zumindest einen Fingers wird mit vernachlässigbarer Verzögerung, bevorzugt im Millisekundenbereich, in eine virtuelle Interaktion umgesetzt. Die Verarbeitung der Daten erfolgt dabei über die interne Recheneinheit oder über eine leistungsstärkere und damit mehr energieverbrauchende externe Recheneinheit durchgeführt, die an eine voluminösere oder fixe Stromquelle angebunden ist.

Viele alltägliche Aufgaben werden durch präzise Bewegungen der Finger gelöst. In dieser Hinsicht sind die meisten vorbekannten Eingabevorrichtungen beschränkt und erlauben insbesondere nicht ein vorsichtiges, also feines und präzises, Manipulieren. Mit der hier vorgeschlagenen Eingabevorrichtung ist erstmals eine besonders präzise Interaktion möglich, wobei keine ermüdenden Bewegungen in einem vorgeschriebenen Eingabebereich ausgeführt werden müssen.

Die erfasste Lage des zumindest einen Fingers betrifft bevorzugt den Teil beziehungsweise die Teile des Fingers, welche zu einer entsprechenden realen Interaktion verwendet werden. Zum Beispiel wird die Lage der zur Interaktion vorgesehenen Fingerkuppe erfasst, wenn zum Beispiel ein Knopf gedrückt oder ein Riegel beiseite geschoben werden soll. In einem anderen Beispiel wird die Fingerinnenfläche erfasst, die bei einem realen Umfassen eines entsprechenden Gegenstands beteiligt wäre. Das Erfassen der Lage des zumindest einen Fingers bedeutet im Zusammenhang dieser Erfindung nicht, die naheliegende Zuordnung des Anbringungsortes der Eingabevorrichtung zu einem erfassten Finger, die aber auch für viele Anwendungen nutzbar ist.

Gemäß einer Ausführungsform zeigt der Benutzer mit einem Finger, typischerweise mit dem Zeigefinger, auf ein Gerät, um dieses Gerät zu steuern. Daraufhin kann der Benutzer Befehle für dieses spezifische Gerät oder mehrere Geräte aus. In einer Ausführungsform erscheinen die oder der Finger dabei auf einem oder mehreren Bildschirmen.

Gemäß einer Ausführungsform ist die Eingabevorrichtung in Kombination mit reellen Oberflächen benutzbar, welche auf eine entsprechende Interaktion des Benutzers mit einer virtuellen Oberfläche ein (reelles) taktiles und/oder haptisches Feedback geben.

Gemäß einer vorteilhaften Ausführungsform der Eingabevorrichtung ist die Befestigungseinrichtung ein Ring, wobei der Ring passgenau an einem Finger der Hand befestigbar ist.

Durch die Ausführung der (gesamten) Eingabevorrichtung als Ring werden verschiedene Vorteile erreicht. Zunächst sind Ringe sozial verträglich und bequem jederzeit tragbar und somit als ständiger Begleiter mitnehmbar. Darüber hinaus hat der Ring den technischen Effekt, dass sich der Ring im Koordinatensystem der Finger befindet und somit bereits die ungefähre Lage der Finger ohne Messung bekannt ist und auch die Finger nicht erst gefunden werden müssen, wie das bei externen Aufnahmeeinheiten der Fall ist, weil im gesamten - möglichst großen - Sichtfeld eine oder mehrere Hände oder auch keine Hände vorhanden sein können. Durch die beschränkte Möglichkeit der Relativlage der Finger zum Ring wird das Handmodell und auch das Bewegungsmodell gegenüber vorbekannten Eingabevorrichtungen schlanker und die Daten schneller verarbeitbar. Auch wird die Bestimmung der Lage der Finger weniger fehleranfällig, weil die Finger nah bei der Aufnahmeeinheit angeordnet sind und durch die beschränkten Möglichkeiten der relativen Lage der Finger zur Aufnahmeeinheit viele verwechselbare Oberflächen aufgrund der Lage im Raum ausgeschlossen werden können, zum Beispiel die Hand eines anderen Menschen im Aufnahmebereich der Aufnahmeeinheit. Weiterhin ist vorteilhaft, dass bei der Lage des Rings an einem Finger nur wenige Okklusionen auftreten können und zudem die wenigen möglichen Okklusionen durch (bekannte) Fingerstellungen bedingt sind, die in der Regel mithilfe eines Handmodells und/oder Bewegungsmodells einen zuverlässigen Rückschluss auf die Lage der verdeckten Finger zulässt.

Der Ring weist zumindest einen Energiespeicher auf, bevorzugt einen Akkumulator, welcher im Ring angeordnet ist, wobei besonders bevorzugt der zumindest eine Energiespeicher im Ring über einen Stecker mit leitenden Kontakten aufgeladen werden kann. Die Energieübertragung kann auch über elektromagnetische Wellen via induktiver oder kapazitiver Koppelung im jeweiligen Nahfeld oder Fernfeld erfolgen. Alternativ oder ergänzend weist der Energiespeicher einen (Super-) Kondensator auf, und ist innerhalb von Sekunden an einer Ladestation aufladbar, bevorzugt ohne dass der Ring abgezogen werden muss. Dieser Kondensator ergänzt den Akkumulator oder ist der alleinige Energiespeicher im Ring. Ein Energiespeicher des Rings ist von einem wiederaufladbaren Akkumulator, elektrischen Speicher (zum Beispiel mittels eines Kondensators oder Superkondensators), chemischen Speicher (zum Beispiel mittels einer Batterie) und/oder mechanischen Speicher (zum Beispiel mittels einer Feder oder mittels einer Schwungmasse) gebildet. Zum Aufladen des zumindest einen Energiespeichers sind in einer Ausführungsform Solarzellen, welche bevorzugt der Ringform angepasst sind, vorgesehen. Alternativ oder ergänzend ist ein Rotor vorgesehen, welcher ähnlich zur Automatikuhr die Massenträgheit oder Temperaturunterschiede zur Gewinnung von elektrischer Energie nutzt. In einer Ausführungsform ist der Ring mit einem solchen Rotor in eine Ladestation einspannbar, um dann mechanisch rotiert zu werden. Bei einer Ausführungsform mit einer Solarzelle ist der zumindest eine Energiespeicher des Rings mittels eines sichtbaren Laserstrahls beleuchtbar, bevorzugt in einer Ladestation mit einer bevorzugt kleinen Solarzelle. Alternativ oder ergänzend ist zumindest eine Solarzelle des Rings über das Umgebungslicht und/oder mittels dazu speziell eingerichteter Lichtquellen beispielsweise in einer Ladestation aufladbar. Wie beispielsweise bei Quarzuhren oder Hörgeräten ist in einer Ausführungsform der zumindest eine Energiespeicher austauschbar. Das Austauschen ist bevorzugt so einfach, dass der Endbenutzer wie bei vielen Uhren die Batterie ohne professionelle Hilfe, und/oder professionelle und/oder teure Hilfsmittel austauschen kann, beispielsweise mittels eines Schraubverschlusses oder Klickverschlusses. Der zumindest eine Energiespeicher ist bevorzugt als zumindest ein dekoratives Element in den Ring integriert. Der Ring ist in einer Ausführungsform aus einer Mehrzahl von separaten Teilringen, welche mit einem unterschiedlichen Radius ineinander angeordnet verbindbar und/oder in Richtung der Ringachse aus jeweils dünneren Teilringen aneinander anliegend, zusammengesetzt und kann auch neu kombiniert werden. In einem der separaten Teilringe ist bevorzugt der zumindest eine Energiespeicher platziert und somit der zumindest eine Energiespeicher mit dem Ersetzen des betreffenden Teilrings austauschbar.

Bevorzugt ist die räumliche Ausdehnung des Rings derart eingerichtet, dass die benachbarten Finger unabhängig vom beringten Finger relativ zum beringten Finger frei beweglich bleiben. Der Ring ist dabei bevorzugt auf eine maximale Standardgröße, zum Beispiel mit einem Ringinnendurchmesser von 23 mm [Millimeter] beziehungsweise mit einem Innenumfang von 69 mm, eingerichtet und es ist eine Anpassvorrichtung im Inneren vorsehbar oder vorgesehen, so dass zum Beispiel ein minimaler Ringinnendurchmesser von 14 mm [Millimeter] beziehungsweise ein minimaler Ringinnenumfang von 42 mm eingestellt werden kann. Zum Beispiel ist ein entsprechender Einsatz für die gewünschte Ringgröße, zum Beispiel 54 mm, in den Ring einsetzbar, so dass der Ring verliersicher am Finger befestigbar ist. Es kann auch ein konisches Gewinde, wie ein Spannfutter, vorgesehen sein, der eine individuelle Anpassung erlaubt. Es können aber auch verschiedene Standardgrößen angeboten werden.

In einer besonders bevorzugten Ausführungsform ist es nicht erforderlich, den Ring in eine exakte Position zu bringen; denn die Aufnahme von Bestandteilen des zumindest einen Fingers sind ausreichend für die Einordnung in ein Handmodell. Zum Beispiel kann der Ring an irgendeiner Position entlang der Fingerachse an der proximalen Phalanx hinter dem proximalen Interphalangealgelenk angeordnet sein. Besonders bevorzugt ist auch eine Verkippung des Rings am Finger um bis zu 30° für den korrekten Betrieb der Aufnahmeeinheit unschädlich.

Allerdings ist es besonders vorteilhaft, wenn der Ring eine Drehwinkelzuordnung um die Fingerachse aufweist, die über eine entsprechende Markierung kontrollierbar ist. Beispielsweise weist der Ring eine Kerbe und/oder einen Farbpunkt auf, der eine schnelle Lageüberprüfung durch den Benutzer erlaubt. Alternativ kann durch einen Beschleunigungssensor die Lage zum Schwerefeld im Vergleich zur Handausrichtung überprüft werden, so dass der Benutzer eine Warnung bei einer Fehllage des Rings erhält. Es können aber auch Schmuckelemente vorgesehen werden, die eine optische Lageüberprüfung erlauben. In der Regel kann ein Ring derart ausreichend sicher mit dem Finger allein über den passgenauen Durchmesser verdrehungssicher verbunden werden, dass nur eine einmalige Lageüberprüfung nach dem Anlegen des Rings nötig ist und der Ring dann bei normaler alltäglicher Beanspruchung der Hand in der gewünschten Lage verbleibt. Es kann aber auch eine geometrische Anlage, also eine Art Flansch, gebildet sein, der in Anlage mit einem weiteren Bestandteil der Hand oder unter Ausnutzung der Unrundheit des beringten Fingers ein Verdrehen des Rings verhindert.

Wird ein Verdrehen des Rings in einem Winkelbereich von bis zu 60° verhindert oder zumindest durch den Benutzer leicht kontrollierbar, ist es möglich, bei der Aufnahmeeinheit eine Beschränkung vorzunehmen. Dann kann zum Beispiel ein Aufnahmebereich, im Weiteren unabhängig von der Technologie als Sichtfeld bezeichnet, auf die Handinnenseite und/oder die Rückhandseite beschränkt werden. Weist der Ring zudem eine separate Aufnahmeeinheit, zum Beispiel für den Daumen auf, die also eine Rechts-Links-Ausrichtung benötigt, ist dies auch durch einen wie oben beschriebenen Hinweis überprüfbar.

Die erfasste Lage des Fingers ist die Lage eines anderen Fingers als die Lage des beringten Fingers. Der Ring ist bevorzugt dazu eingerichtet, darüber hinaus zusätzlich zur Erfassung der Lage zumindest eines anderen nicht beringten Fingers auch die Lage des beringten Fingers zu erfassen, wobei hierzu nicht unbedingt die Aufnahmeeinheit verwendet werden muss. Bevorzugt ist für diese spezielle Aufgabe ein Distanzsensor vorgesehen. Der Ring ist bevorzugt zumindest dazu eingerichtet die Lage des Zeigefingers, und besonders bevorzugt zusätzlich die Lage des Daumens, aufzunehmen, während der Ring an dem Mittelfinger oder Ringfinger befestigt ist.

In einer Ausführungsform oder in einem speziellen Betriebsmodus ist die Eingabevorrichtung dazu eingerichtet, nur die Richtung des Zeigefingers auszuwerten und dadurch einfache Interaktionen bei beispielsweise Präsentationen oder Bedienen eines Fernsehers zu ermöglichen. Die Eingabevorrichtung ist bevorzugt als Ersatz für eine 3D-Computermaus für rechnergestützte Zeichungsanwendungen (CAD, englisch: computer-aided design) nutzbar.

Gemäß einer vorteilhaften Ausführungsform der Eingabevorrichtung ist die Aufnahmeeinheit zumindest eine Kamera mit einem vorbestimmten Sichtfeld, wobei mittels des Sichtfelds zumindest ein Finger der Hand erfassbar ist und wobei die zumindest eine Kamera dazu eingerichtet ist, Bilder natürlicher Oberflächen aufzunehmen, bevorzugt mittels eines Weitwinkelobjektivs.

Die Aufnahmeeinheit ist bevorzugt zumindest eine Kamera zur visuellen Aufnahme von Bestandteilen des zumindest einen Fingers. Eine andere Ausführungsform verwendet einen Ultraschallsensor, einen Laseremitter mit Laseraufnehmer oder eine Messeinrichtung für bioelektrische Felder beziehungsweise für die Störung eines erzeugten Feldes. Die Verwendung einer Kamera mit visuellem Sichtfeld erlaubt eine besonders einfache und inzwischen sehr kostengünstige Umsetzung. Weil die Eingabeeinrichtung direkt an der Hand angeordnet ist, kommt es in der alltäglichen Verwendung nur äußerst selten zu einer Versperrung des Sichtfelds, insbesondere bei der Ausführung als Ring an einem Finger. Die Störanfälligkeit der Sichtfeldbedingung ist ein gemeinsamer Nachteil der bisher bekannten vergleichbaren Vorrichtungen. Es gibt hierfür umfangreiche Forschung, um präzise Aussagen verdeckter Handkomponenten zu ermitteln, wie zum Beispiel die Software HOPE (engl.: Hand-Object Pose Estimation), die jedoch aufwendig und/oder fehleranfällig sind. Mit der hier vorgeschlagenen Eingabevorrichtung ist eine solche Software überflüssig.

Es sei darauf hingewiesen, dass die Kamera natürliche Oberflächen der Hand aufnimmt, ohne dass die Hand mit speziellen Reflektions-Positions-Markern oder einer Beschichtung, zum Beispiel in Form eines Handschuhs, versehen werden muss. Weil zudem die möglichen Aufnahmedaten auf ein (schlankes) Handmodell beschränkt sind - also in der Recheneinheit oder in einer externen Recheneinheit die Aufnahmedaten nur mit dem gespeicherten Handmodell verglichen werden muss, müssen die Aufnahmedaten nicht von einer guten Qualität in Hinsicht auf die Auflösung, Schärfe und Kontrast sein. Damit ist zumindest eine kleine und kostengünstige Kamera einsetzbar. Ganz besonders bevorzugt ist die Kamera mit einem Weitwinkelobjektiv ausgestattet und an der Seite der Handinnenfläche und/oder gegenüberliegend auf der Seite der Rückhand angeordnet und weist ein Sichtfeld zwischen bevorzugt ±100°, besonders bevorzugt zwischen ±80°, auf.

In einer bevorzugten Ausführungsform ist für ein Sichtfeld nur eine Kamera vorgesehen, die nur zweidimensionale Bilder aufnimmt. Die Schattierungen und Größenverhältnisse der zweidimensionalen Daten erlauben mithilfe eines Handmodells die Ermittlung eines 3D-Datensatzes. Dieser 3D-Datensatz wiederum erlaubt mithilfe des Handmodells und/oder des Bewegungsmodells eine Berechnung von Bestandteilen der Hand, besonders bevorzugt der Fingerkuppen, die nicht im Sichtfeld einer Kamera angeordnet sind. Diese Datenermittlung ist insbesondere dadurch erleichtert, dass die zumindest eine Kamera mit ihrem Sichtfeld direkt auf Bestandteile der Hand gerichtet ist. Besonders bei der Ausführung als Ring ist das Sichtfeld derart auf die Aufnahme von Bestandteilen der Hand eingerichtet, dass die Möglichkeiten einer relativen Lage zum Ring stark eingeschränkt sind und die Ermittlung der Daten daher besonders robust und sicher vorgenommen werden kann; denn die Aufnahmen können in vorbestimmten Bereichen des Sichtfelds ausschließlich Bestandteile der Hand sein. Um eine geringe Bauhöhe des Rings zu erreichen, müssen die Brennweite und die Objektivhöhe minimal sein. Daher ist bevorzugt das Objektiv mit nur einer einzigen Linse realisiert. In einer Ausführungsform ist die verwendete Linse mittels einer klassischen Linse gebildet. Alternativ ist die Linse mittels einer oder mehrerer aspherischer Linsen, mittels Mikrolinsen-Arrays, Fresnellinsen und/oder Gradientenlinsen gebildet. Diese bestehen aus geeigneten Glass oder Kunststoff und besitzen bevorzugt eine kratzfeste Oberfläche.

Bei Verfahren wie Präzisionsspritzguss für Kunststoff oder Präzisionsblankpressen für Glas ist bevorzugt in der Form funktional die optische Linse, die mechanische Sicherung der Brennweite und/oder die Verteilung des Lichts der Infrarotlichtemitter, bevorzugt inklusive Formung des Lichtkegels, in einem Teil integriert. Die Halterung der Linse und/oder die Blende ist bevorzugt in das Gehäuse des Rings integriert, so dass zur Befestigung der Linse(n) keine zusätzlichen Komponenten nötig sind. Zur leichteren Integration kann die Linse und die Halterung in einem 2-Komponenten Spritzguss hergestellt werden. Bevorzugt kommen vergleichbare Technologien für die Optik und Beleuchtung zum Einsatz wie bei Kameras, 3D-Kameras, Gestensensoren und Beleuchtungen in Smartphones.

Gemäß einem weiteren Aspekt ist die Kamera bevorzugt zudem zum Scannen von Markierungen und/oder Barcodes beziehungsweise QR-Codes benutzbar.

Gemäß einer vorteilhaften Ausführungsform der Eingabevorrichtung weist die Eingabevorrichtung einen Infrarotlichtemitter auf und die zumindest eine Kamera ist zur Aufnahme von Infrarotlicht eingerichtet, wobei mittels des Infrarotlichtemitters gemäß einer vorbestimmten Taktung Infrarotlicht im Sichtfeld der zumindest einen Kamera emittierbar ist.

Bei dieser bevorzugten Ausführungsform wird die Eigenschaft der Haut zur Reflektion von Lichtfrequenzen oberhalb des für den Menschen sichtbaren Bereichs, dem Infrarotlicht, genutzt, so dass das menschliche Auge durch die Emission von Infrarotlicht nicht gestört wird. Durch kurzzeitige Lichtemissionen, zum Beispiel als Lichtblitze im Millisekundenbereich, wird die Wahrnehmung durch eine entsprechende Infrarotkamera getaktet. Die Wahrnehmung wird dabei von dem in den meisten Anwendungen eher statischen beziehungsweise weniger dynamischen Hintergrund abgelenkt und nur die Veränderungen der dynamischeren Fingerbewegung beziehungsweise Handbewegung wahrgenommen. Dies ist zum Beispiel durch eine integrative Wahrnehmung der Bewegung, also Wahrnehmung der Bewegungsänderung, einstellbar. Somit wird die notwendige Leistung der Aufnahmeeinrichtung auf die gewünschten Daten reduzierbar und der Datenaufwand schlank gehalten. Damit ist eine schnelle Datenverarbeitung mit geringem Ressourceneinsatz möglich.

Gemäß einer vorteilhaften Ausführungsform der Eingabevorrichtung umfasst die Eingabevorrichtung weiterhin zumindest eine Eingabeeinheit, wobei mittels der Eingabeeinheit durch kontaktierende Betätigung zumindest ein Befehl an die Recheneinheit der Eingabevorrichtung eingebbar ist.

Die hier vorgeschlagene Eingabeeinheit erlaubt dem Benutzer bereits eine Eingabe von einfachen Befehlen, wie zum Beispiel An/Aus, Moduswechsel oder ähnliches. Die Eingabeeinheit ist zum Beispiel ein (Druck-) Knopf, ein Touchpad oder ein Beschleunigungssensor, wobei letzterer durch zum Beispiel Schütteln der Eingabevorrichtung einen Befehl umsetzt. Gemäß einer vorteilhaften Ausführungsform der Eingabevorrichtung ist die Eingabeeinheit mittels der Aufnahmeeinheit integral gebildet, wobei durch Annähern oder Kontaktieren der Aufnahmeeinheit, beziehungsweise des (Weitwinkel-) Objektivs, vom Benutzer, bevorzugt mit dem Daumen, ein Befehl in der Recheneinheit der Eingabevorrichtung ausgelöst wird. Mit der Eingabeeinheit kann zum Beispiel Energie gespart werden, wenn die Eingabevorrichtung nicht verwendet werden muss. Beispielsweise kann sich die Eingabevorrichtung zumindest teilweise selbst deaktivieren (in den Standby-Modus wechseln), wenn über einen vorbestimmbaren Zeitraum keine Bewegung registriert wird. Dies kann dem Benutzer auch optisch durch eine Veränderung der Darstellung des Anzeigers auf zumindest einem Bildschirm angezeigt werden. Wird wieder eine Bewegung registriert, aktiviert sich die Eingabevorrichtung wieder (vollständig). Die Eingabevorrichtung ist beispielsweise mittels der Eingabeeinheit abschaltbar. Alternativ oder ergänzend schaltet sich die Eingabevorrichtung nach Überschreitung eines vorbestimmten zeitlichen Limits selbsttätig ab, wenn der Benutzer die Eingabevorrichtung nicht mehr benutzt. Alternativ oder ergänzend ist mittels eines Signals von einer externen Recheneinheit die Eingabevorrichtung abschaltbar. Alternativ oder ergänzend ist die Eingabevorrichtung mittels spezieller Gesten, wie zum Beispiel das Berühren der Fingerspitzen des Daumens und des Ringfingers, sofort abschaltbar.

Für eine einfache Ausführungsform der Eingabevorrichtung als Ring sowohl für Linkshänder als auch für Rechtshänder ist eine Eingabeeinheit, bevorzugt ein (Druck-) Knopf, auf je einer Seite angebracht, so dass sie jeweils zum Betätigen mittels des Daumens der tragenden Hand leicht kontaktiert werden kann. Beispielsweise ist ein (für eine virtuelle Interaktion als Objekt registrierter) Wasserhahn mit der Eingabevorrichtung regulierbar, indem der Benutzer die Eingabeeinheit drückt/kontaktiert und gedrückt/kontaktiert hält und dann an dem Wasserhahn entlang streift, um die Wassermenge zu verändern.

Gemäß einer vorteilhaften Ausführungsform der Eingabevorrichtung umfasst die Eingabevorrichtung weiterhin zumindest einen Beschleunigungssensor und/oder ein Gyroskop, mittels derer eine räumliche Lageänderung der Eingabevorrichtung erfassbar ist.

Durch diese ergänzende Sensorik ist es möglich, die Veränderung der räumlichen Lage der Eingabevorrichtung selbst als weitere (ergänzende) Eingabedaten zu verwenden. Zum Beispiel kann der Benutzer nicht nur durch Fingerbewegung der ansonsten ruhigen, oder zumindest nicht durch die Aufnahmeeinheit registrierten Bewegung der Hand, ein Scrollen eingeben, sondern auch oder alternativ mittels der Bewegung der gesamten Hand. Hierdurch wird die natürliche Bedienbarkeit der dem Benutzer angezeigten und durch die Eingabevorrichtung steuerbaren virtuellen Oberfläche vervollkommnet. Der Benutzer muss nicht über die Art und Weise der Eingabe nachdenken, sondern die Bedienung folgt eingeübten und gewohnten Bewegungen, die er aus der Interaktion mit der natürlichen (realen) Umwelt kennt. Gemäß einer vorteilhaften Ausführungsform werden die von der Eingabevorrichtung ermittelten Daten kombiniert. Beispielsweise werden die Messungen der Beschleunigungssensoren und/oder der Gyroskope zur Stabilisierung der Kamerabilder benutzt. Mehrere Beschleunigungssensoren und/oder Gyroskope können in der Eingabevorrichtung an verschiedenen Orten platziert werden. Dadurch ist die Bewegung der Eingabevorrichtung im Raum genauer erfassbar. Ein Magnetometer kann für die absolute Orientierung eingesetzt werden. Gemäß einer Ausführungsform überwacht, wenn die Eingabevorrichtung ausgeschaltet ist, zumindest ein Beschleunigungssensor und/oder zumindest ein Gyroskop die Bewegung der die Eingabevorrichtung tragenden Hand beziehungsweise des Fingers in kurzen Intervallen. Sobald zum Beispiel der Finger einmal oder mehrmals auf eine Oberfläche tippt, schaltet sich die Eingabevorrichtung ein. Dies ersetzt beispielsweise funktional die Eingabeeinheit, welche dann nicht benötigt wird.

Gemäß einer vorteilhaften Ausführungsform sind weitere Messeinrichtungen in der Eingabevorrichtung vorgesehen, wie zum Beispiel elektromagnetische Distanzsensoren, Messung und Auswertung der Signalstärke der Transmitter und/oder Receiver und die Auswertung der Bilddaten analog zu einer optischen Maus. Diese zusätzlichen Daten können mit den bestehenden Bilddaten, Beschleunigungsdaten und/oder Gyrodaten kombiniert werden. Zur Fusion der Messdaten eignen sich unter anderen Derivate des Kalman-Filters wie zum Beispiel der Unscented Kalman-Filter.

Die Eingabevorrichtung, beziehungsweise das computerausführbare Verfahren zum Betreiben der Eingabevorrichtung, ist bevorzugt dazu eingerichtet, mit Hilfe von mittels den entsprechenden Komponenten der Eingabevorrichtung Bilddaten, Beschleunigungsdaten, Gyrodaten, weiteren Sensorinformationen und/oder Informationen von der verbundenen externen Recheneinheit inklusive Daten aus externen Quellen wie dem Internet den Träger der Eingabevorrichtung zu erkennen. Die Eingabevorrichtung ist weiterhin bevorzugt dazu eingerichtet, das Verhalten des jeweiligen Trägers in einem Benutzerprofil in der Eingabevorrichtung oder in der verbundenen externen Recheneinheit abzuspeichern und bei Bedarf wieder abzurufen. Die Erkennung des Trägers wird gemäß einer bevorzugten Ausführungsform zur Authentifizierung benutzt, analog beispielsweise zu einem Fingerabdruckscanner. Die Authentifizierung ist beispielsweise für die Autorisierung von Bezahlvorgängen und/oder zum Öffnen von Türen nutzbar.

In der Eingabevorrichtung sind in einer Ausführungsform weitere Sensoren wie Pulszähler oder Temperaturmesser integriert. Mit den Daten der Beschleunigungssensoren und/oder der Gyroskope ist beispielsweise das Verhalten des Benutzers auswertbar, zum Beispiel durch Zählen von zufuß zurückgelegten Schritten.

In einer Ausführungsform sind weitere Sensoren seitlich auf dem Ring auf der radial-ulnar Achse der Hand angeordnet, welche zum Messen einer Distanz oder zum Erfassen einer Bewegung der angrenzenden Fingerglieder eingerichtet sind. Auf den angrenzenden Fingern ist dafür kein zusätzliches Element angebracht.

Es sei aber darauf hingewiesen, dass auch ohne solche Sensoren durch allein die Wahrnehmung des zumindest einen Fingers mittels der Aufnahmeeinheit auf Basis eines Bewegungsmodells der Hand eine natürliche Bedienbarkeit erreicht wird, die unter Verwendung von ausschließlich Beschleunigungssensoren oder anderer zu ähnlichen Zwecken eingesetzter vorbekannter Sensorik keineswegs erreichbar sind. Die Bewegungsaufnahmevielfalt wird auch nicht durch die Verwendung von mehreren Eingabevorrichtungen erreicht, die zum Beispiel jeweils an einem Finger angeordnet werden. Die Komplexität der wahrnehmbaren Bewegungen der Hand steigt also mit der hier vorgeschlagenen Eingabevorrichtung erheblich, obwohl nur ein einziger Ring pro Hand notwendig ist.

In einer vorteilhaften Umsetzung der Eingabevorrichtung ist eine Abstufung der Befehle, ob über die Aufnahmeeinheit oder über die Bewegungssensoren möglich. Zum Beispiel wird bei einer Manipulationsbewegung eines oder mehrerer Finger eine virtuelle Seite langsam gescrollt, während bei einem Wischen mit der ganzen Hand, das mit einem Bewegungssensor registriert wird, ein schnelles Scrollen beziehungsweise Blättern ausgelöst wird.

Es sei dabei darauf hingewiesen, dass es nicht ausgeschlossen ist, mit der Eingabevorrichtung auch weniger intuitive oder sogar absichtlich verwirrende zu erlernende Bewegungen in eine Interaktion umgesetzt werden können, wenn dies zum Beispiel für die Geheimhaltung der Interaktion für nützlich erachtet wird.

Gemäß einer vorteilhaften Ausführungsform der Eingabevorrichtung umfasst die Eingabevorrichtung zumindest eine Markierung, mittels derer die Lage der Eingabevorrichtung mittels einer externen Erfassungseinrichtung ermittelbar ist.

Eine Eingabevorrichtung mit dieser Markierung kann erfasst werden, bevorzugt visuell mittels einer weiteren Kamera an einem HMD. Beispielsweise ist ein IR-Marker, der zur vordefinierten Reflektion von Infrarotlicht eingerichtet ist oder eine optische Charakteristik, die einer Kamera, die die externe Erfassungsvorrichtung bildet, bekannt ist, an der Eingabevorrichtung vorgesehen, so dass eine Recheneinheit mittels der externen Erfassungseinrichtung zum Beispiel die Raumlage der Eingabevorrichtung relativ zu der externen Erfassungseinrichtung erkennt. Auch vorteilhaft wird eine NFC-Signatur (Near Field Communication) eingesetzt, deren Position durch ein Führen der Eingabevorrichtung in ein entsprechendes NFC-Sensorfeld, zum Beispiel zum Aktivieren an eine HMD, gehalten werden kann. Besonders bevorzugt ist die Erfassung der Lage der Eingabevorrichtung nur einmal für eine Verwendung notwendig beziehungsweise nur unter großen Zeitabständen (zum Beispiel alle paar Minuten) notwendig, weil die Lage durch andere in der Eingabevorrichtung angeordnete Sensorik, die relative Lageveränderungen ermittelt, errechnet werden kann. Lediglich zum Fehlerausgleich wird dann die Lage wieder korrigiert. Für manche Anwendungen reicht auch ein einmaliges Erfassen der Lage im Raum, weil die menschliche Auge-Hand-Koordination in Verbindung mit der virtuellen Darstellung eine entsprechende Anpassung vornimmt und der Benutzer zumindest für die konkrete Anwendung leichte Abweichungen akzeptiert.

Gemäß einer Ausführungsform sind auf einer (realen) Oberfläche Markierungen vorgesehen, welche spezielle Gebiete der Interaktion abgrenzen. Beispielsweise legen eine oder mehrere Markierungen die Position einer virtuellen Tastatur fest. Die Eingabevorrichtung erkennt optische Markierung über Kamerabilder, elektromagnetische Sender und/oder Reflektoren, beispielsweise mittels Antennen.

Gemäß einem weiteren Aspekt der Offenbarung wird ein System zur Darstellung von und zur Interaktion mit einer virtuellen Oberfläche vorgeschlagen, welches zumindest eine der folgenden Komponenten aufweist:
- zumindest eine Eingabevorrichtung gemäß der obigen Beschreibung,
- zumindest einen Bildschirm zur Darstellung einer virtuellen Oberfläche für die visuelle Wahrnehmung;
- zumindest eine zentrale Recheneinheit zur Verarbeitung von Aufnahmedaten in eine entsprechende virtuelle Interaktion,
wobei mittels der virtuellen Interaktion zumindest eine virtuelle Oberfläche manipulierbar ist.

Das hier vorgeschlagene System zeigt eine vorteilhafte Einbindung der Eingabevorrichtung in eine Anwendung für einen menschlichen Benutzer. Der Benutzer erhält über zumindest einen Bildschirm eine Darstellung zumindest einer virtuellen Oberfläche. Der zumindest eine Bildschirm ist dabei eine jegliche bekannte oder noch zu entwickelnde Vorrichtung, die zur Darstellung von durch den Benutzer wahrnehmbarer veränderbarer (2D-/3D-) Bilder eingerichtet ist. Eine virtuelle Oberfläche ist ein Bild, das der Benutzer als Gegenstand wahrnimmt. Dabei ist es nebensächlich, wie natürlich beziehungsweise wie real ihm die Darstellung des Gegenstands erscheint. Die Oberfläche kennzeichnet sich jedoch dadurch, dass es in ein Verarbeitungssystem eingebunden ist, welches eine Manipulation an der Oberfläche ermöglicht. Zum Beispiel kann die Oberfläche die eines realen Objekts sein, welches mithilfe von steuerbaren Werkzeugen, zum Beispiel auf Basis von Robotik, manipulierbar ist. Auch kann die Oberfläche gänzlich künstlich erzeugt sein und entsprechend durch eine Programmierung mittels vorgegebener virtueller Interaktionen manipuliert werden. Hierzu werden im Nachfolgenden einige erläuternde Beispiele angeführt werden.

In diesem System wird nun die virtuelle Oberfläche mittels der oben beschriebenen Eingabevorrichtung die Manipulation der zumindest einen virtuellen Oberfläche besonders intuitiv ermöglicht, weil es nicht unbedingt notwendig ist, Gesten zur Steuerung zu erlernen.

Die notwendige Recheneinheit kann sowohl in der Eingabevorrichtung als auch an einer anderen Stelle im System, zum Beispiel einem HMD oder einem Smartphone oder einer Verarbeitungseinheit, die per Internet verbunden ist, angeordnet sein. Die Recheneinheit kann dabei ein Handmodell und ein Bewegungsmodell gespeichert haben, oder diese Daten aus der Eingabevorrichtung oder einer weiteren externen Quelle beziehen. Dies ist insbesondere unter den Gesichtspunkten der notwendigen Prozessorgröße, Speichergröße und/oder Datenstrategie des Anbieters einzurichten.

Gemäß einer vorteilhaften Ausführungsform des Systems ist der zumindest eine Bildschirm ein kopfmontierbarer Bildschirm und die zumindest eine virtuelle Oberfläche in die visuelle Wahrnehmung einer realen Umgebung eingebunden.

In dieser besonders bevorzugten Ausführungsform des Systems ist der zumindest eine Bildschirm in einem kopfmontierbaren Bildschirm (HMD) vorgesehen und die Darstellung der virtuellen Oberfläche mischt sich mit der realen Umgebung des Benutzers, in einer sogenannten AR [Augmented Reality]. Mittels der hier vorgeschlagenen Eingabevorrichtung bleiben die Hände für Beschäftigungen in der realen Umgebung stets frei. Beispielsweise wird einem Handwerker bei der Reparatur eine Anleitung über das HMD eingeblendet und zum Blättern oder Zoomen oder Verschieben der Anzeige ist die Eingabevorrichtung verwendbar, während die Eingabevorrichtung bei der handwerklichen Tätigkeit nicht hinderlich ist. Bei einem HMD ist bevorzugt für jedes Auge ein einzelner Bildschirm vorgesehen, wobei durch eine entsprechende unterschiedliche räumliche Anordnung ein und desselben Motivs beim Benutzer ein räumliche Wahrnehmung (3D) erzeugt wird.

Gemäß einer vorteilhaften Ausführungsform des Systems ist mittels einer Mehrzahl von Fingern simultan eine Mehrzahl von virtuellen Interaktionen ausführbar.

Die bisher bekannten mobilen Systeme sind bisher auf wenige Eingabeoperatoren, beispielsweise einen einzigen Cursor, beschränkt oder zumindest auf ein eingeschränktes Feld in einer Sichtverbindung zu einer entfernten Kamera beschränkt, wobei wiederum die äußerst bewegliche Hand in vielen Bewegungsstellungen sich selbst verdeckt. Eine entsprechend verdeckte Handstellung ist im Stand der Technik entweder nicht ausgleichbar oder mit einem aufwendigen Handmodell meist nur ungenau ermittelbar. Die Eingabevorrichtung erlaubt nun eine im Übrigen sichtverdeckte Interaktion der zumindest einen Hand mit dem System, zum Beispiel mit der Hand in der Hosentasche oder bei einer Reparatur in einem schwer zugänglichen Raum, bei dem einem ein HMD einen virtuellen "Röntgen-Blick" verleiht, also das (virtuelle) Sichtfeld, in dem sich die Hände befinden, für eine Aufnahme durch eine am HMD angeordnete Kamera beschränkt ist.

Gemäß einer vorteilhaften Ausführungsform des Systems ist zumindest eine Eingabevorrichtung an jeder Hand vorgesehen und die relative Lage der Eingabevorrichtungen zueinander ist referenzierbar.

Bei dieser vorteilhaften Ausführungsform ist eine Manipulation von einem virtuellen Objekt mit beiden Händen ermöglicht. Insbesondere durch ein bevorzugt einmaliges Referenzieren der relativen Lage der Hände zueinander wird die Bedienung einer virtuellen Darstellung besonders erleichtert. Es muss aber nicht für jede Anwendung ein Referenzieren der Hände zueinander stattfinden. Für viele Anwendungen, zum Beispiel die Bedienung einer virtuellen Tastatur, erfordert dies nicht, wenn die Buchstaben zum Beispiel zur jeweiligen Hand fixiert ist; also bei einer deutschen Tastaturbelegung (QWERTZ) zum Beispiel der Buchstabenblock QWERT der linken Hand und der Buchstabenblock ZUIOPÜ der rechten Hand zugeordnet ist. Bei referenzierten Händen lässt sich aber beispielsweise ein virtueller Block mit beiden Händen greifen und bewegen, wenn die Hände in der richtigen relativen Lage zu dem virtuellen Objekt angeordnet sind, und beispielsweise einen Abstandsgrenzwert gemäß der obigen Beschreibung unterschreiten.

Gemäß einem weiteren Aspekt der Offenbarung wird ein Verfahren zur Manipulation einer virtuellen Oberfläche mittels eines Systems zur Darstellung von und zur Interaktion mit einer virtuellen Oberfläche, bevorzugt gemäß der obigen Beschreibung, wobei das System zumindest eine der folgenden Komponenten aufweist:
- zumindest einen Bildschirm zur Darstellung einer virtuellen Oberfläche für die visuelle Wahrnehmung;
- zumindest eine zentrale Recheneinheit zur Verarbeitung von Aufnahmedaten in eine entsprechende virtuelle Interaktion,
wobei mittels der virtuellen Interaktion die zumindest eine virtuelle Oberfläche manipulierbar ist; und
- zumindest eine Eingabevorrichtung für eine virtuelle Anwendung mittels einer Recheneinheit, bevorzugt gemäß der obigen Beschreibung, wobei die Eingabevorrichtung zumindest die folgenden Komponenten aufweist:
   - eine Befestigungseinrichtung zum Befestigen an einer Hand;
   - eine Aufnahmeeinheit zur Erstellung von Aufnahmedaten der relativen Lage zumindest eines Fingers einer Hand zur Eingabevorrichtung und/oder zu zumindest einem weiteren Bestandteil der Hand und/oder zu einer realen Oberfläche, wenn die aktivierte Eingabevorrichtung an der Hand mittels der Befestigungseinrichtung befestigt ist;
   - eine interne Recheneinheit zur Verarbeitung der Aufnahmedaten;
   - eine Transmittereinheit zum Versenden der Verarbeiteten Aufnahmedaten der Recheneinheit,
   wobei mittels besagter Aufnahmedaten mittels der internen und/oder einer externen Recheneinheit zumindest eine entsprechende virtuelle Interaktion erzeugbar ist,
wobei das Verfahren zumindest die folgenden Schritte aufweist:
- Erfassen zumindest eines Teils eines Fingers mittels der an einer Hand befestigten Eingabevorrichtung;
- Erkennen des zumindest einen Teils des Fingers mittels eines gespeicherten Handmodells;
- Erkennen der relativen Lage des zumindest einen Teils des Fingers zur Eingabevorrichtung und/oder zu zumindest einem Teil eines erkannten Bestandteils der Hand;
- Vergleichen der erfassten relativen Lage mit einem Bewegungsmodell des gespeicherten Handmodells;
- Errechnen einer relativen Lage des zumindest einen Fingers;
- Errechnen einer virtuellen Interaktion auf Basis der relativen Lage des zumindest einen Fingers und/oder einer Änderung der relativen Lage des zumindest einen Fingers.

Mit dem hier vorgeschlagenen Verfahren, das sowohl als Computerprogramm als auch auf einem Computerprogramprodukt gespeichert auf einem modularen Rechner mit zumindest einem Prozessor, gegebenenfalls zumindest einer Speichereinheit, zumindest einem Arbeitsspeicher und zumindest einer Benutzerschnittstelle im Zusammenhang mit einer Eingabevorrichtung gemäß der obigen Beschreibung ausführbar ist, wird eine besonders einfache Interaktion mit einem virtuellen Objekt möglich.

Die Eingabevorrichtung ist für die Ausführung des Verfahrens an der Hand, bevorzugt einem Finger, ganz besonders bevorzugt einem der Finger Ringfinger, Mittelfinger oder Zeigefinger, befestigt. Eine exakte Einmessung der Lage an der Hand ist nicht notwendig. Die Befestigung ist auch allein verliersicher auszuführen, so dass der Benutzer sich nicht um die Eingabevorrichtung sorgen muss.

Für die verfahrensgemäße Erkennung der Bestandteile der Hand, also zumindest von Teilen des zumindest einen Fingers ist eine exakte Positionierung nicht notwendig. Die Aufnahmeeinheit ist in dieser Position in die Lage versetzt, zumindest Teile des zumindest einen Fingers zu erfassen und die Aufnahmedaten werden mit einem Handmodell verglichen. Damit werden der Finger und seine Lage erkannt. Das zugrundegelegte Bewegungsmodell erlaubt dabei eine Aussage über Veränderungen der Bewegung des erfassten Fingers als auch gegebenenfalls von anderen Bestandteilen der Hand, zum Beispiel bei einem vollständigen Strecken des erfassten Fingers und einer translatorischen Bewegung der Fingerspitze muss zugleich eine Verdrehung des Handtellers um das Fingerwurzelgelenk und das Handwurzelgelenk stattfinden. Daraus lässt sich eine relative räumliche Lageänderung der Fingerspitze errechnen, auch wenn die Fingerspitze selbst nicht im Erfassungsbereich der Aufnahmeeinheit der Eingabeeinrichtung liegt. Es kann zum Beispiel der zurückgelegte Weg aus der Ausgangslage des erfassten Fingers berechnet werden, die einem notwendigen Weg zum Drücken eines virtuellen Knopfs entspricht und somit der Knopf mit dieser Bewegung betätigbar ist.

Weil die Eingabevorrichtung so an der Hand angeordnet ist, dass stets ein zur Errechnung der virtuellen Interaktion hinreichende Teil des zumindest einen Fingers erfassbar ist, kann die Eingabevorrichtung, abgesehen von einer gegebenenfalls extern ausgeführten Berechnung der Fingerlage, vollkommen autark alle notwendigen Informationen aufnehmen und an eine implementierte Benutzerschnittstelle weitergeben. Es ist lediglich beispielsweise eine Funkverbindung zu der Benutzerschnittstelle des Systems notwendig.

Gemäß einer vorteilhaften Ausführungsform des Verfahrens ist ein Lagegrenzwert betreffend die Lage eines Fingers relativ zur Eingabevorrichtung, zu einer realen Oberfläche und/oder zu einem weiteren Eingabegerät vordefiniert und ein Finger ist zur virtuellen Interaktion aktiviert, wenn der Lagegrenzwert unterschritten wird, und ein Finger ist deaktiviert, wenn der Lagegrenzwert überschritten ist.

Bei dieser vorteilhaften Ausführungsform ist die Lage eines Fingers relativ zur Eingabevorrichtung und/oder zu einer realen Oberfläche und/oder zu einem weiteren Eingabegerät, zum Beispiel einer Computermaus oder einer Tastatur, zur Aktivierung des Fingers in der virtuellen Umgebung nutzbar. Wird zum Beispiel der Finger nach oben, also in Streckrichtung zur Rückhand, geführt, so überschreitet der Finger einen vorbestimmten Lagegrenzwert und wird deaktiviert. Taucht ein Finger hingegen nach unten, also in Beugerichtung zur Handinnenfläche, unter den Lagegrenzwert ab, wird der Finger aktiviert und ist dann in der virtuellen Umgebung zur Eingabe von Steuerwerten nutzbar. Besonders bevorzugt befindet sich der Lagegrenzwert an der Grenze eines Sichtfelds einer Kamera in einem Ring, dessen Kamera auf der Seite der Handinnenfläche angeordnet ist. Besonders bevorzugt befindet sich der Lagegrenzwert bei einer vorbestimmten senkrechten, bevorzugt lotrechten, Distanz zu einer, bevorzugt waagerechten, realen Oberfläche oder zu einem weiteren Eingabegerät, von zum Beispiel mindestens 2 mm [Millimeter], besonders bevorzugt mindestens 5 mm [Millimeter]. Besonders bevorzugt ist die reale Oberfläche ein Bildschirm, bevorzugt ein flacher Bildschirm oder ein (beliebig) geformter, zum Beispiel gebogener Bildschirm.

In einer besonders vorteilhaften Ausführungsform muss ein Finger eine Aktivierungsbewegung, wie zum Beispiel ein Tippen, ausführen, um aktiviert zu werden und umgekehrt eine Deaktivierungsbewegung, um deaktiviert zu werden. Somit wird vermieden, dass der Benutzer eine unbequeme Fingerhaltung einhalten muss, um einen Finger deaktiviert zu halten.

Es sei dabei darauf hingewiesen, dass das Sichtfeld der Aufnahmeeinheit nicht mit der Darstellung auf einem Bildschirm in Verbindung stehen muss. Vielmehr kann ein Finger aktiviert sein, während er nicht auf dem Bildschirm dargestellt wird, weil er sich zum Beispiel außerhalb der Darstellung befindet oder durch die Darstellung verdeckt wird. Dies gilt entsprechend auch umgekehrt für einen Finger, der sich im Darstellungsbereich des Bildschirms befinden würde, jedoch deaktiviert wurde.

Gemäß einer vorteilhaften Ausführungsform des Verfahrens ist bei einer Mehrzahl von erfassten Fingern ein virtuelles Objekt kontaktierbar und/oder manipulierbar.

Durch die erfassten Finger ist in dieser bevorzugten Ausführungsform ein virtuelles Objekt virtuell anfassbar, das heißt der Benutzer erhält eine Rückmeldung über eine Interaktion mit einem virtuellen Objekt, wenn er sich mit den Fingern an die Oberfläche des virtuellen Objekts begibt. Beispielsweise wird das Objekt bei einer virtuellen Berührung, die zu einer Überschneidung der Finger mit dem Objekt führen würden, verschoben und/oder verformt. Zum Beispiel lässt sich ein Objekt bewegen, wenn es zum Beispiel durch Unterschreitung eines Abstandsgrenzwertes gemäß der obigen Beschreibung gegriffen ist.

Gemäß einer vorteilhaften Ausführungsform des Verfahrens wird über eine zweite Eingabevorrichtung an der zweiten Hand das Verfahren gemäß der obigen Beschreibung für die zweite Hand ausgeführt und mit jeweils zumindest einem Finger eine gemeinsame virtuelle Interaktion ausgeführt.

Bei dieser Ausführungsform des Verfahrens können virtuelle Interaktionen über zwei oder mehr Finger der zwei Hände ausgeführt werden. Dazu können bevorzugt die zumindest zwei Finger räumlich zueinander referenziert werden, um so durch die relative Lage zueinander wie in einer realen Umgebung handeln zu können. Für viele Anwendungen, wie zum Beispiel mit einer virtuellen Tastatur ist die tatsächliche relative Lage der Finger zueinander nicht unbedingt relevant. Zum Beispiel ist dann während des Führens eines Autos, mit beschäftigten Handinnenflächen (Lenkrad und gegebenenfalls Schaltknüppel) dennoch zur gleichen Zeit ein Tippen auf einer Tastatur im Zehnfingersystem möglich.

Gemäß einer vorteilhaften Ausführungsform des eingangs beschriebenen Verfahrens zur Darstellung einer virtuellen Interaktion auf zumindest einem Bildschirm mittels einer Recheneinheit wird der zumindest eine Anzeiger mittels einer Eingabevorrichtung gemäß der obigen Beschreibung erzeugt.

Die oben beschriebene Eingabevorrichtung eignet sich besonders für die Erzeugung mehrerer Anzeiger und ist zudem nicht lokal an ein externes Kamerasystem oder eine Sichtverbindung zu einem externen Kamerasystem zum Beispiel an einem HMD gebunden. Damit ist eine bequeme, autarke und intuitive Bedienung einer virtuellen Oberfläche möglich. Die Darstellung der Finger als umgrenzte Deformationen erlaubt eine gute Rückmeldung an den Benutzer und eine intuitive virtuelle Interaktion in der virtuellen Umgebung, die allein visuell an den Benutzer übermittelt wird.

Der Ring erlaubt in Kombination mit dem hier beschriebenen Verfahren eine individualisierte Deformationsdarstellung. Wenn zum Beispiel eine Eingabevorrichtung in Form eines Ringes gemäß der obigen Beschreibung verwendet wird, könnte der verwendete Ringinnendurchmesser die Größe der Deformation bestimmen. Alternativ könnte die erfasste Aufnahme einen Größenabgleich erlauben. Dies ist vorteilhaft, weil der Benutzer sich an die Größe seines Fingers gewöhnt hat und so besonders intuitiv in der virtuellen Umgebung agieren kann.

Gemäß einer vorteilhaften Ausführungsform des eingangs beschriebenen Verfahrens zur Darstellung einer virtuellen Interaktion auf zumindest einem Bildschirm mittels einer Recheneinheit ist das Verfahren in ein System gemäß der obigen Beschreibung eingebunden.

Mittels der Einbindung des Verfahrens zur Darstellung der Anzeiger und der virtuellen Interaktionen mittels der eigenen Finger des Benutzers als umgrenzte Deformationen, insbesondere in Verbindung mit einem HMD, wird eine unabhängige und einfache Bedienung möglich. Somit ist erstmals eine Lösung für die Bedienbarkeit der durch eine inzwischen eigentlich marktfähige HMD dargestellte Anwendungen gefunden. Es wird keine lokale Bindung, keine unnatürliche Bewegung und kein Erlernen von Gesten vom Benutzer gefordert. Zudem ist das Verfahren mittels der Eingabevorrichtung bequem und alltagstauglich umsetzbar.

Gemäß einer vorteilhaften Ausführungsform der hier beschriebenen Verfahren ist jedes der Verfahren als ein Computerprogramm ausgeführt und/oder auf einem Computerprogrammprodukt gespeichert und auf einer Recheneinheit, bevorzugt einem modularen PC beziehungsweise Mac, auf einem zugeschnittenen Konsumentenprodukt wie einem Smartphone oder HMD nach einem Kopieren des Computerprogramms oder nach einem durch Installation betriebsfertigen Verfahrens ausführbar. Das als Computerprogramm und/oder das auf einem Computerprogrammprodukt gespeicherte Verfahren können dabei modular ausgeführt sein und notwendige bekannte und bereits ausgearbeitete Verfahrensbestandteile zur Ausführung des Verfahrens aus anderen Quellen, wie zum Beispiel einem Server im Internet, beziehen. Darüber hinaus kann zusätzliche Hardware, wie zum Beispiel Kameras und Bewegungssensoren, bevorzugt in einem Smartphone und/oder einer HMD, zur Ausführung des Verfahrens eingebunden werden.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Skizze einer umgrenzten Deformation,
- Fig. 2:: eine Skizze einer umgrenzten Deformation mit Damm,
- Fig. 3:: eine Skizze einer Eingabevorrichtung als Ring,
- Fig. 4:: ein System mit einem HMD und einer Eingabevorrichtung als Ring,
- Fig. 5:: eine Hand mit einer Eingabevorrichtung in Form eines Rings,
- Fig.6:: ein Sequenzdiagramm eines bevorzugten Erfassungsverfahrensablaufs,
- Fig. 7:: ein Sequenzdiagramm eines bevorzugten Aktivierungsverfahrens, und
- Fig. 8:: ein virtuelles Objekt mit fünf Deformationen der Finger einer rechten Hand.

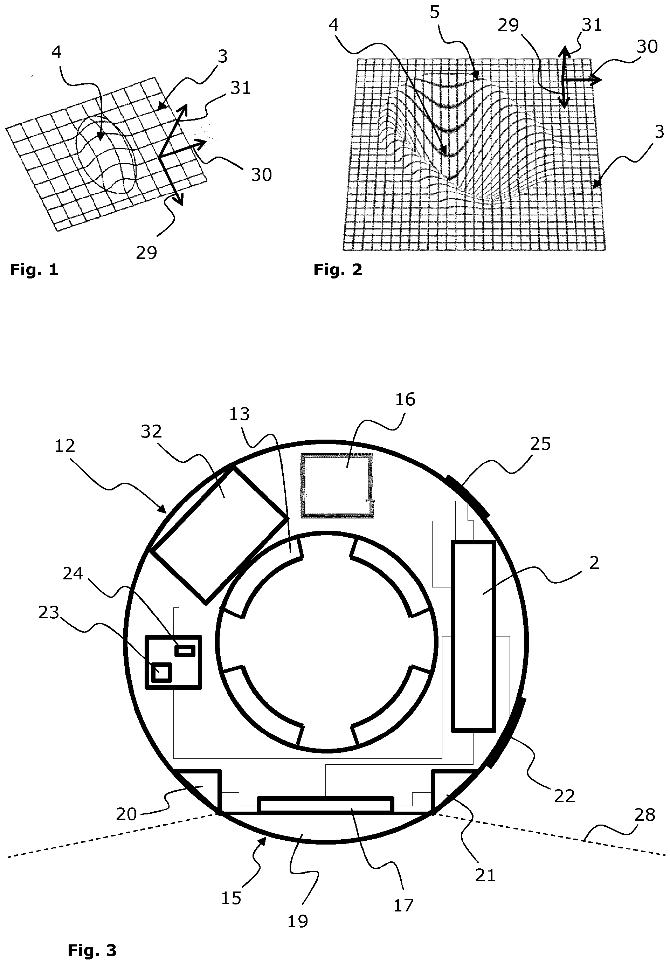

In Fig. 1 ist eine virtuelle Oberfläche 3 prinzipiell durch eine Gitterstruktur dargestellt. Für viele Anwendungen wird die Gitterstruktur nur auf einer Bearbeitungsanwendung für einen Programmierer dargestellt werden und dem Benutzer werden Schattierungen und/oder Verformungen von Strukturelementen, wie zum Beispiel Buchstaben, auf der virtuellen Oberfläche 3 dargestellt werden. Auf der virtuellen Oberfläche 3 ist ein kartesisches Koordinatensystem definiert (aber in der Regel dem Benutzer nicht dargestellt), wobei der Nullpunkt der z-Achse 31 in der Ebene der unverformten virtuellen Oberfläche 3 liegt. Die x-Achse 29 und die y-Achse 30 spannen diese Ebene auf. Hier wird ein Anzeiger, der durch eine Eingabevorrichtung jeglicher Art erzeugbar ist, durch eine umgrenzte Deformation 4 der virtuellen Oberfläche 3 dargestellt. Hier kommt die Deformation 4 entlang der z-Achse 31 in positiver Richtung aus der virtuellen Oberfläche 3 heraus. Die Deformation 4 ist umgrenzt, so dass die restliche virtuelle Oberfläche 3 von der Deformation 4 unbeeinflusst bleibt.

In Fig. 2 ist eine ähnliche Deformation 4 in einer virtuellen Oberfläche 3, die hier wieder zur besseren Verständlichkeit als Gitterstruktur dargestellt ist, gezeigt. Hier wird wieder ein kartesisches Koordinatensystem mit dem Nullpunkt der z-Achse 31 in der Ebene der unverformten virtuellen Oberfläche 3 definiert. Hier wird nun die Deformation 4 hauptsächlich als Vertiefung in negativer Richtung zur z-Achse 31 gebildet, wobei wie bei einem inkompressiblen elastischen Material das verdrängte virtuelle Material einen Damm 5, oder Wulst, in positiver Richtung zur z-Achse 31 aufwirft. Dies gibt dem Benutzer eine Rückmeldung über die erwünschten Eigenschaften der virtuellen Oberfläche 3 und erleichtert zudem das Auffinden der Deformation 4.

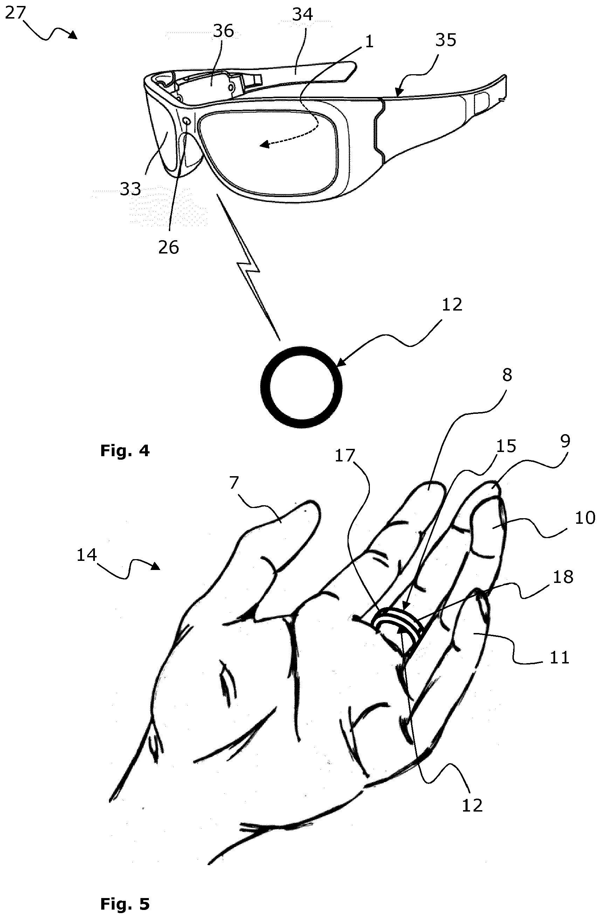

In Fig. 3 ist schematisch eine Eingabevorrichtung 12 als Ring dargestellt, die Mittels einer, hier verstellbaren, Befestigungseinrichtung 13 passgenau an einem Finger (vgl. zum Beispiel Fig. 5) befestigbar ist. In der Eingabevorrichtung 12 ist eine interne Recheneinheit 2 vorgesehen, die die Steuerung und Verarbeitung beziehungsweise Aufbereitung der ermittelten Daten durchführt. Zu diesem Zweck umfasst die Recheneinheit 2 zumindest einen Prozessor, wobei auch die weiteren Komponenten eigene Prozessoren aufweisen können. Die Energie wird durch einen Akkumulator 32 geliefert, der bevorzugt induktiv aufladbar ist, wodurch auf eine Steckerverbindung verzichtet werden kann. Zur Übertragung der aufbereiteten oder verarbeiteten Daten an zumindest einen Bildschirm oder eine externe Recheneinheit (vgl. zum Beispiel Fig. 4) ist eine Antenne (Transmittereinheit 16) vorgesehen, die zum Beispiel im freien Frequenzbereich von 2,4 GHz [Giga-Hertz] arbeitet und zum Beispiel den Bluetooth^{®}-Standard unterstützt. Im hier unten dargestellten Bereich der Eingabevorrichtung 12, die bevorzugt im befestigten Zustand an einem Finger zur Handinnenfläche hin ausgerichtet ist (vgl. zum Beispiel Fig. 5), befindet sich eine Aufnahmeeinheit 15, bestehend aus einer Kamera 17, beziehungsweise einem Photosensor, und einem Weitwinkelobjektiv 19, so dass ein Sichtfeld 28 entsteht, das einen Winkel um die Fingerachse von fast 180° aufweist. Somit sind die Finger, zumindest in einem aktivierten Zustand, fast jederzeit zumindest teilweise erfassbar. Mithilfe eines Handmodells und eines Bewegungsmodells kann dann zum Beispiel die Lage der Fingerkuppen berechnet werden. In diesem bevorzugten Beispiel werden weiterhin ein erster Infrarotlichtemitter 20 und ein zweiter Infrarotlichtemitter 21 derart im Ring angeordnet, dass die seitlich liegenden Finger beleuchtbar sind. Bevorzugt wird das Licht getaktet, zum Beispiel mit der zweifachen, bevorzugt mindestens der vierfachen, Frequenz der Bilddarstellungsrate, abgegeben. Somit werden die reflektierenden Finger bei optimaler Belichtung, und bevorzugt mittels einer integrativen Änderungsmessung, aufnehmbar. Die richtige Lage der Eingabevorrichtung 12 ist für den Benutzer oder eine externe Erfassungseinrichtung 26 (vgl. Fig. 4) mittels einer Markierung 25, die zum Beispiel ein Infrarotlichtreflektor ist und/oder als Erhebung vom Benutzer erspürt werden kann, sicherstellbar.

Weiterhin weist diese Eingabevorrichtung 12 eine Eingabeeinheit 22 auf, die hier zum Beispiel ein drückbarer Knopf ist, der getragen wie in Fig. 5 zum Beispiel durch den Daumen betätigbar ist.

Gemäß einem ergänzenden Aspekt weist die Eingabevorrichtung einen Beschleunigungssensor 23, bevorzugt für alle drei translatorischen Raumrichtungen, und/oder ein Gyroskop 24, bevorzugt für alle drei räumlichen Rotationsachsen, auf, wodurch die Bedienbarkeit noch intuitiver wird. Besonders bevorzugt ist insbesondere das Gyroskop 24 ein und ausschaltbar, weil in der üblichen Konfiguration die Sensormassen des Gyroskops 24 für die Messung in Bewegung gehalten werden müssen und das Gyroskop 24 somit im Messzustand einen relativ hohen Energiebedarf aufweist.

In Fig. 4 ist ein System 27 gezeigt, bei dem ein, oder bevorzugt zwei, Bildschirm(e) 1 auf der Innenseite von zumindest einem der, bevorzugt lichtdurchlässigen, Brillengläser 33 eines HMD 35 angeordnet ist, so dass mittels der mittels Brillenbügel 34 getragenen HMD 35 eine AR-Anwendung in einer Alltagssituation möglich ist. Die Eingabevorrichtung 12, die hier wieder als Ring skizziert ist, steht im aktivierten Zustand mit einer externen Recheneinheit 36, die hier zumindest zu einem Teil an dem HMD 35 angeordnet ist, in Funkverbindung und überträgt somit verarbeitete oder aufbereitete Daten über die Lage zumindest eines Fingers.

In Fig. 5 ist eine menschliche Hand 14 dargestellt, die einen ersten Finger 7, den Daumen, einen zweiten Finger 8, den Zeigefinger, einen dritten Finger 9, den Mittelfinger, einen vierten Finger 10, den Ringfinger, und einen fünften Finger 11, den kleinen Finger, umfasst, wobei eine Eingabevorrichtung 12 wieder in Form eines passgenau befestigbaren Rings am Mittelfinger 9 befestigt ist, wie man einen Schmuckring trägt. Die Eingabevorrichtung 12 ist dabei bevorzugt ebenso locker befestigbar, dass sie wie ein Schmuckring verliersicher befestigt ist, aber dennoch verrutschen kann. Eine exakt ausgerichtete Lage der Eingabevorrichtung 12 entlang der Fingerachse, und bevorzugt zu einem Drehwinkel um die Fingerachse, ist für die Erkennung zumindest eines der Finger 7 bis 11 nicht notwendig. Die Eingabevorrichtung 12 weist in diesem Beispiel eine Aufnahmeeinheit 15 zur Handinnenfläche hin auf, die sich aus einer ersten Kamera 17 für den Daumen 7 und einer zweiten Kamera 18 für die übrigen Finger 8 bis 11 zusammensetzt.

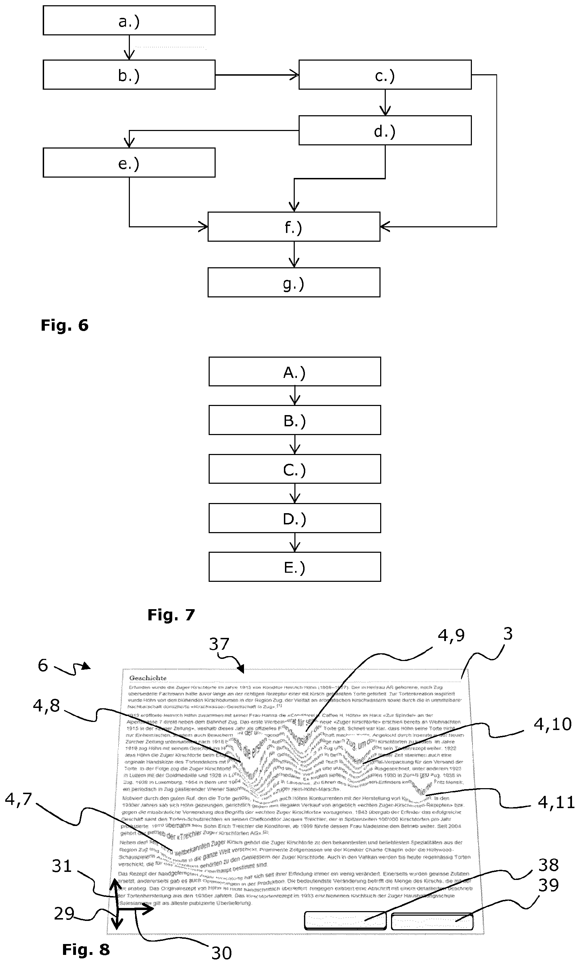

In Fig. 6 ist schematisch ein Sequenzdiagramm zur Erzeugung einer Deformation 4 (vgl. Fig. 1 oder 2) infolge einer Erfassung von zumindest einem Finger dargestellt. In den Schritten a.) bis g.) wird ein Verfahren ausgeführt, welches durch vorangehende und nachfolgende Schritte, sowie Zwischenschritte ergänzbar ist: In Schritt
a.) wird ein Bild erfasst;
b.) wird zumindest eine Teilfläche zumindest eines Fingers als solche identifiziert und isoliert;
c.) wird die zumindest eine ermittelte Teilfläche mit einem Handmodell verglichen und einem Finger zugeordnet;
d.) wird die Lage des Fingers eingeordnet und es werden eventuell Rückschlüsse auf die Lage anderer Finger und/oder der Handinnenfläche, und besonders bevorzugt auf die Lage der Fingerkuppen gezogen, so dass aus der zumindest einen erfassten Teilfläche mithilfe des Handmodells und des Bewegungsmodells eine deutlich verbesserte und umfassendere Information erzeugt wird;
e.) wird diese Information in eine Lageinformation des zumindest einen Anzeigers umgerechnet;
f.) wird auf Basis des Handmodells und eventuell auf Basis des Bewegungsmodells die Form und relative Lage einer jeweiligen Deformation berechnet, wobei gegebenenfalls die zugewiesenen Materialeigenschaften berücksichtig werden;
g.) wird die Darstellung der zumindest einen Deformation auf zumindest einem Bildschirm in einer virtuellen Oberfläche berechnet.

Dieses Verfahren wird in einer ausreichenden Taktung, zum Beispiel zu 60 Hz oder ergänzt durch eine entsprechende Interpolation bei geringerer Taktungsgeschwindigkeit, wiederholt durchgeführt.

In Fig. 7 ist schematisch ein Sequenzdiagram zur Aktivierung und Deaktivierung von Funktionen der Eingabevorrichtung 12 (vgl. zum Beispiel Fig. 3) dargestellt. In den Schritten A.) bis E.) wird ein Verfahren ausgeführt, welches durch vorangehende und nachfolgende Schritte, sowie Zwischenschritte ergänzbar ist: In Schritt
A.) wird die Eingabevorrichtung 12 durch eine Eingabeeinheit 22 gestartet und zumindest die Fingerkuppe des Zeigefingers 8 (vgl. Fig. 5), zum Beispiel nach dem Verfahren in Fig. 6, erfasst und mittig im zumindest einen Bildschirm oder mittig auf einer virtuellen Oberfläche oder zum Beispiel bei der rechten Hand auf dem H einer deutschen QWERTZ-Tastatur, bevorzugt mittels einer Deformation, angezeigt;
B.) wird durch Klappen zumindest eines weiteren Fingers zur Handinnenfläche der zumindest eine weitere Finger aktiviert und auf dem zumindest einen Bildschirm in entsprechender relativer Lage zum Zeigefinger, ebenfalls bevorzugt mittels einer Deformation, angezeigt;
C.) ist ein virtuelles Objekt mithilfe der aktivierten Finger greifbar, drückbar, ziehbar, schiebbar oder in sonstiger Weise manipulierbar. Bevorzugt ist zur Manipulation eine Unterschreitung eines Abstandsgrenzwerts notwendig. Bei Überschreitung des Abstandsgrenzwerts beschränkt sich die Interaktion auf die Darstellung der Lage der aktivierten Finger;
D.) ist nun eine Deaktivierung der anderen Finger gewünscht, was durch Strecken, bevorzugt aller, Finger ausgelöst wird. Die Darstellung der übrigen Finger, ausgenommen der Zeigefinger, verschwindet nun und es ist keine Interaktion mit den übrigen Fingern mehr möglich;
E.) wird die Eingabevorrichtung 12 durch Betätigen der Eingabeeinheit 22 vollständig deaktiviert und die Darstellung des Zeigefingers verschwindet ebenfalls. Somit ist die Interaktion mit einer virtuellen Oberfläche mittels der Eingabevorrichtung 12 beendet.

In Fig. 8 wird ein virtuelles Objekt 6 gezeigt, welches einen Text auf einer ersten virtuellen Oberfläche 3 zum Lesen vom Benutzer und zwei Bedienelemente, hier ein erster Knopf 38 und ein zweiter Knopf 39, einer GUI 37 umfasst. Hierbei bilden die Knöpfe 38 und 39 jeweils eine zweite und dritte virtuelle Oberfläche, die unabhängig von der ersten virtuellen Oberfläche 3 gestaltbar sind, zum Beispiel (jeweils) eine abweichende Materialeigenschaft aufweisen. Auch hier wird zur besseren Verständlichkeit ein kartesisches Koordinatensystem mit einer x-Achse 29, y-Achse 30 und z-Achse 31 mit dem Nullpunkt der z-Achse 31 in der Ebene der unverformten ersten virtuellen Oberfläche 3 dargestellt, welches für den Benutzer nicht angezeigt werden würde.

Im Bereich der ersten virtuellen Oberfläche sind eine Mehrzahl von umgrenzten Deformationen 4 gezeigt, wobei die Deformationen 4 hier jeweils mit den Bezugszeichen der zugehörigen Finger wie in Fig. 5 gekennzeichnet sind. Aufgrund der Form und Lage der Deformationen ist dem Benutzer intuitiv klar, dass die Deformation 4 in der Darstellung unten links durch den Daumen 7 verursacht ist. Ebenso die Deformation 4 oben links durch den Zeigefinger 8, die Deformation 4 daneben durch den Mittelfinger 9, die Deformation 4 daneben durch den Ringfinger 10 und die Deformation 4 ganz rechts außen durch den kleinen Finger 11. Weiterhin kann der Benutzer der Darstellung entnehmen, dass die Deformationen 4 des Zeigefingers 8, Mittelfingers 9 und Ringfingers 10 entlang der negativen z-Achse 31 tiefer sind, als die des Daumens 7 und des kleinen Fingers 11. In einer virtuellen Umsetzung wird dem Benutzer das sehr viel deutlicher als es die verlustfrei kopierbare Darstellung eines einzigen Screenshots erlaubt, weil dem Benutzer weitere Hilfsmittel angezeigt werden können, wie zum Beispiel Schattierungen, gerichtete oder diffuse Reflexionen, Bluring, 3D-Animationen oder ähnliches, und weiterhin eine Echtzeitänderung der Tiefe der Deformation 4 wahrnehmbar ist, wenn der Benutzer seine Finger entsprechend bewegt. In diesem Beispiel ist nun eine Manipulation der ersten Oberfläche 3 mittels der Finger 8 bis 10 möglich, die zum Beispiel ein Scrollen, Drehen, Kippen oder Schieben der Seite oder ein Zoomen in den Text erlauben. Löst der Benutzer den durch die tieferen Deformationen 4 verursachten Kontakt mit den Fingern 8 bis 10 durch zum Beispiel Anheben dieser Finger in positiver Richtung entlang der z-Achse 31, wird die erste Oberfläche 3 nicht mehr manipulierbar und alle Finger 7 bis 11 sind relativ zur ersten Oberfläche 3 verrutschbar, zum Beispiel zu einem der Knöpfe 38 oder 39, die dann zum Beispiel ebenso durch eine Bewegung in negativer Richtung entlang der z-Achse 31 betätigbar sind, wobei die Knöpfe 38 und 39 beispielsweise nach einer Betätigung mit ihrer gesamten virtuellen Oberfläche in negativer Richtung entlang der z-Achse 31 bewegbar sind und nach einer Betätigung zur Anzeige in der vertieften Stellung verbleiben, wie das hier beispielhaft beim zweiten Knopf 39 gezeigt ist. Bevorzugt wird ein Knopf 38 und/oder 39 durch Überlappung mit einem Anzeiger (hier durch eine Deformation repräsentiert) in eine Mittelstellung, die zwischen einer gelösten Position (Knopf 38) und einer betätigten Position (Knopf 39) zum Beispiel in der Nullebene der ersten Oberfläche 3 angeordnet, wobei bevorzugt der betreffende Knopf keine Delle erhält, aber bei einer Erstreckung der im Bereich der ersten Oberfläche 3 üblichen Darstellung des Anzeigers (Deformation 4) als eben diese Deformation 4 dargestellt wird.

Mit den hier dargestellten Umsetzungsbeispielen lässt sich eine autarke und intuitive Bedienung, insbesondere für Anwendungen im Bereich der Augmented Reality, umsetzen, ohne dass der Benutzer bei seinen sonstigen Tätigkeiten behindert wird.

### Bezugszeichenliste

- 1: Bildschirm
- 2: Recheneinheit
- 3: virtuelle Oberfläche
- 4: umgrenzte Deformation
- 5: Damm
- 6: virtuelles Objekt
- 7: erster Finger
- 8: zweiter Finger
- 9: dritter Finger
- 10: vierter Finger
- 11: fünfter Finger
- 12: Eingabevorrichtung
- 13: Befestigungseinrichtung
- 14: Hand
- 15: Aufnahmeeinheit
- 16: Transmittereinheit
- 17: erste Kamera
- 18: zweite Kamera
- 19: Weitwinkelobjektiv
- 20: erster Infrarotlichtemitter
- 21: zweiter Infrarotlichtemitter
- 22: Eingabeeinheit
- 23: Beschleunigungssensor
- 24: Gyroskop
- 25: Markierung
- 26: externe Erfassungseinrichtung
- 27: System
- 28: Sichtfeld
- 29: x-Achse
- 30: y-Achse
- 31: z-Achse
- 32: Akkumulator
- 33: Brillenglas
- 34: Brillenbügel
- 35: HMD
- 36: externe Recheneinheit
- 37: GUI
- 38: erster Knopf
- 39: zweiter Knopf

## Patentansprüche

1. Verfahren zur Darstellung einer virtuellen Interaktion auf zumindest einem Bildschirm (1) mittels einer Recheneinheit (36), aufweisend zumindest die folgenden Schritte:
- Darstellen einer virtuellen Oberfläche (3) auf zumindest einem Bildschirm (1), wobei die virtuelle Oberfläche (3) ein Koordinatensystem mit einer x-Achse und einer y-Achse in der virtuellen Oberfläche (3) und einer aus der virtuellen Oberfläche (3) hinausweisende z-Achse aufweist;
- Darstellen einer Lage eines Anzeigers mittels einer umgrenzten Deformation (4) der virtuellen Oberfläche (3), wenn sich der Anzeiger auf der virtuellen Oberfläche (3) befindet, wobei diese umgrenzte Deformation (4) eine flächige Ausdehnung in x-Richtung und in y-Richtung und eine Erstreckung in z-Richtung aufweist;
- Verlagern der umgrenzten Deformation (4) in x-Richtung und/oder y-Richtung bei einer entsprechenden Verlagerung des Anzeigers in x-Richtung und/oder y-Richtung unter Aufhebung der vorherigen umgrenzten Deformation (4), wobei der zumindest eine Anzeiger mittels einer Eingabevorrichtung mittels der Recheneinheit erzeugt wird, wobei die Eingabevorrichtung zumindest die folgenden Komponenten aufweist:
- eine Befestigungseinrichtung zum Befestigen an einer Hand;
- eine Aufnahmeeinheit zur Erstellung von Aufnahmedaten der relativen Lage zumindest eines Fingers einer Hand zur Eingabevorrichtung oder zu einer realen Oberfläche, wenn die Eingabevorrichtung an der Hand mittels der Befestigungseinrichtung befestigt ist,
wobei der Anzeiger über den zumindest einen Finger des Benutzers gesteuert wird, wobei die Deformation größer oder kleiner wird, wenn die Verlagerung des Anzeigers relativ zu der virtuellen Oberfläche eine entsprechende z-Komponente aufweist.

2. Verfahren nach Anspruch 1, wobei eine Mehrzahl von Fingern jeweils eine separate umgrenzte Deformation bewirkt und mittels der Mehrzahl von Fingern zumindest ein virtuelles Objekt greifbar ist.

3. Verfahren nach Anspruch 2, wobei eine Mehrzahl von virtuellen Oberflächen (3) vorgesehen sind, die zumindest ein virtuelles Objekt (6) bilden, und wobei eine Mehrzahl von Anzeigern vorgesehen sind, die jeweils durch eine umgrenzte Deformation (4) angezeigt werden, wobei bei einer entsprechenden Änderung zumindest einer der umgrenzten Deformationen (4) das virtuelle Objekt (6) manipulierbar ist.

4. Verfahren nach einem der vorhergehenden Ansprüche, **dadurch gekennzeichnet, dass** die umgrenzte Deformation (4) der Form und Größe eines Fingers entspricht.

5. Verfahren nach einem der vorhergehenden Ansprüche, wobei die Eingabevorrichtung (12) die weiteren Komponenten aufweist:
- eine interne Recheneinheit (2) zur Verarbeitung der Aufnahmedaten;
- eine Transmittereinheit (16) zum Versenden der Verarbeiteten Aufnahmedaten der Recheneinheit (2),
wobei mittels besagter Aufnahmedaten mittels der internen und/oder einer externen Recheneinheit (2) zumindest eine virtuelle Interaktion erzeugbar ist.

## Claims

1. A method for displaying a virtual interaction on at least one screen (1) by means of a computer unit (36), having at least the following steps:
- displaying a virtual surface (3) on at least one screen (1), wherein the virtual surface (3) has a coordinate system with an x-axis and a y-axis in the virtual surface (3) and a z-axis pointing out of the virtual surface (3);
- displaying a position of a pointer by means of a defined deformation (4) of the virtual surface (3), if the pointer is located on the virtual surface (3), wherein this defined deformation (4) has a two-dimensional extension in the x-direction and in the y-direction and an extension in the z-direction;
- displacing the defined deformation (4) in the x-direction and/or y-direction upon a corresponding displacement of the pointer in the x-direction and/or y-direction while the previously defined deformation (4) is cancelled, wherein the at least one pointer is generated by means of an input device by means of the computer unit, wherein the input device has at least the following components:
- a fastening device for fastening to a hand,
- a recording device for creating recording data of the relative position of at least one finger of a hand with respect to the input device or with respect to a real surface, if the input device is fastened to the hand by means of the fastening device,
wherein the pointer is controlled via the at least one finger of the user, wherein the deformation increases or reduces, if the displacement of the pointer relative to the virtual surface has a corresponding z-component.

2. The method according to Claim 1, wherein a plurality of fingers respectively produces a separate defined deformation, and at least one virtual object can be grasped by means of the plurality of fingers.

3. The method according to Claim 2, wherein a plurality of virtual surfaces (3) is provided that form at least one virtual object (6), and wherein a plurality of pointers is provided that are displayed respectively by a defined deformation (4), wherein upon a corresponding change of at least one of the defined deformations (4), the virtual object (6) can be manipulated.

4. The method according to any one of the preceding claims, **characterized in that** the defined deformation (4) corresponds to the shape and size of a finger.

5. The method according to any one of the preceding claims, wherein the input device (12) has the further components:
- an internal computer unit (2) for processing the recording data;
- a transmitter unit (16) for sending the processed recording data of the computer unit (2),
wherein at least one virtual interaction can be generated by means of said recording data by means of the internal and/or an external computer unit (2).

## Revendications

1. Procédé de représentation d'une interaction virtuelle sur au moins un écran (1) au moyen d'une unité de calcul (36), dans lequel le procédé comprend au moins les étapes suivantes :
- la représentation d'une surface virtuelle (3) sur au moins un écran (1), dans lequel la surface virtuelle (3) comprend un système de coordonnées avec un axe x et un axe y dans la surface virtuelle (3) et un axe z sortant de la surface virtuelle (3) ;
- la représentation d'une position d'un indicateur au moyen d'une déformation délimitée (4) de la surface virtuelle (3) lorsque l'indicateur se trouve sur la surface virtuelle (3), dans lequel cette déformation délimitée (4) présente une extension plane dans la direction x et dans la direction y et une extension dans la direction z ;
- le déplacement de la déformation délimitée (4) dans la direction x et/ou dans la direction y lors d'un déplacement correspondant de l'indicateur dans la direction x et/ou dans la direction y en supprimant la déformation délimitée (4) précédente, dans lequel l'au moins un indicateur est généré au moyen d'un dispositif d'entrée au moyen de l'unité de calcul, et dans lequel le dispositif d'entrée comprend au moins les composants suivants :
- un appareil de fixation pour la fixation à une main,
- une unité d'enregistrement pour la création de données d'enregistrement de la position relative d'au moins un doigt d'une main par rapport au dispositif d'entrée ou à une surface réelle lorsque le dispositif d'entrée est fixé à la main au moyen de l'appareil de fixation,
dans lequel l'indicateur est commandé par l'au moins un doigt de l'utilisateur, dans lequel la déformation devient plus grande ou plus petite lorsque le déplacement de l'indicateur par rapport à la surface virtuelle présente une composante z correspondante.

2. Procédé selon la revendication 1, dans lequel une pluralité de doigts effectuent chacun une déformation délimitée séparée et au moins un objet virtuel peut être saisi au moyen de la pluralité de doigts.

3. Procédé selon la revendication 2, dans lequel une pluralité de surfaces virtuelles (3) sont prévues, qui forment au moins un objet virtuel (6), et dans lequel une pluralité d'indicateurs sont prévus, qui sont indiqués chacun par une déformation délimitée (4), dans lequel, lors d'un changement correspondant d'au moins l'une des déformations délimitées (4), l'objet virtuel (6) peut être manipulé.

4. Procédé selon l'une quelconque des revendications précédentes, **caractérisé en ce que** la déformation délimitée (4) correspond à la forme et à la taille d'un doigt.

5. Procédé selon l'une quelconque des revendications précédentes, dans lequel le dispositif d'entrée (12) comprend les autres composants :
- une unité de calcul interne (2) pour le traitement des données d'enregistrement ;
- une unité de transmission (16) pour l'envoi des données d'enregistrement traitées à l'unité de calcul (2),
dans lequel au moins une interaction virtuelle peut être générée au moyen desdites données d'enregistrement au moyen de l'unité de calcul interne et/ou d'une unité de calcul externe (2).
